Europäisches Patentamt

European Patent Office

Office européen des brevets

(19)

(11) Numéro de publication: **0 237 393 B1**

(12) **FASCICULE DE BREVET EUROPEEN**

(45) Date de publication du fascicule du brevet:
**14.06.89**

(51) Int. Cl.⁴: **F 16 B 5/00, B 63 B 3/68**

(21) Numéro de dépôt: **87400345.2**

(22) Date de dépôt: **17.02.87**

(54) Clé de liaison et raccords d'éléments de structure par empilage de clés.

(30) Priorité: **18.02.86 FR 8602174**

(43) Date de publication de la demande:
**16.09.87 Bulletin 87/38**

(45) Mention de la délivrance du brevet:
**14.06.89 Bulletin 89/24**

(84) Etats contractants désignés:
**AT BE CH DE ES GB GR IT LI LU NL SE**

(56) Documents cités:
**DE-A- 2 309 567**
**DE-A- 2 645 088**
**DE-B- 1 205 686**
**FR-A- 1 162 949**
**FR-A- 2 225 047**
**GB-A- 2 118 905**
**US-A- 1 713 516**

(73) Titulaire: **RECHERCHE DEVELOPPEMENTS MARINE,**
**37 Rue Yves Collet, F-29200 Brest (FR)**

(72) Inventeur: **Bordat, André, 8 Boulevard Solférino,**
**F-92500 Rueil-Malmaison (FR)**

(74) Mandataire: **Le Brusque, Maurice et al, Cabinet Harlé et**
**Phélip 21, rue de la Rochefoucauld, F-75009 Paris (FR)**

ACTORUM AG

# Description

La présente invention concerne des clés de liaison destinées à être utilisées pour assurer des raccordements d'éléments de structure tels que des cloisons, parois ou panneaux de cloisons ou de parois, qui peuvent être sensiblement plans ou présenter une certaine courbure, et dont les surfaces moyennes sont concourantes le long d'une ligne de jonction correspondante, pour des éléments de structures pris au moins deux à deux.

L'invention se rapporte également aux raccordements d'au moins deux éléments de structure du type présenté ci-dessus et tels que chaque raccord comprenne au moins un empilage de plusieurs clés de liaison selon l'invention.

L'invention vise en outre les ensembles structuraux constitués par l'assemblage entre eux, et à l'aide de tels raccords, d'éléments de structure tels que des parois, cloisons ou panneaux de paroi ou de cloisons, et plus particulièrement d'éléments de structure, éventuellement incurvés, réalisés en un matériau léger, tel que le bois, une matière plastique ou un matériau composite, et susceptibles d'être soumis à des efforts d'arrachement ou de compression au niveau de leurs jonctions, comme cela est le cas, à titre d'exemple, des parois et cloisons constitutives des coques, bordés, ponts et cloisons internes de vaisseaux spatiaux, de navettes spatiales ou d'aéronefs.

Enfin, l'invention vise les ensembles structuraux incomplets ou inachevés constitués par au moins un élément de structure et au moins un raccord selon l'invention, dont les clés de liaison empilées forment au moins une attache en attente et sur laquelle un autre élément de structure, tel qu'un panneau ou une cloison, est à solidariser par collage ou par boulonnage par exemple.

Dans l'état actuel de la technique, les liaisons entre éléments de structure sensiblement plats et concourants créent des zones d'affaiblissement de la structure. Il est bien connu que les moyens les plus couramment utilisés pour assurer la liaison entre deux éléments à assembler lèsent plus ou moins ces derniers. Il en est ainsi, notamment, des boulons, rivets et autres organes de liaison analogues. Quant aux jonctions entre pièces en matériaux composites, chacun sait qu'elles sont sujettes au délaminage des couches stratifiées constitutives de ces matériaux, quel que soit le procédé actuellement employé pour assurer les jonctions.

Afin de compenser l'affaiblissement de la structure dans les zones des joints, on procède à des renforcements, qui pénalisent le devis de masse et n'ont pas toujours un effet heureux, notamment lors de sollicitations faisant travailler la structure en fatigue.

Il a déjà été proposé, par GB-A-2118 905 ou la demande de brevet FR 82 06.875, de réaliser des raccords d'assemblage de cloisons et parois, telles que les bordés extérieurs, ponts horizontaux et parois verticales des coques de bateaux, qui sont constitués chacun par plusieurs attaches présentant chacune un pivot et au moins une patte s'étendant radialement à partir du pivot. Les pivots des attaches sont empilés axialement le long de la ligne de jonction des cloisons et parois à raccorder, et les attaches de l'empilement sont orientées de sorte que les pattes d'attaches contiguës s'étendent alternativement selon les surfaces moyennes des parois ou cloisons à réunir. Il en résulte que les pivots des attaches correspondant à chacune des cloisons réunies par un même raccord sont mutuellement imbriqués dans les pivots des attaches correspondant aux autres cloisons. Chaque attache a sensiblement la forme générale d'une plaquette prismatique allongée, délimitée par deux faces planes transversales, perpendiculaires à la ligne de jonction, et par deux faces planes latérales, parallèles entre elles et à la ligne de jonction, et éventuellement revêtues d'un tissu unidirectionnel dont les fils composants s'étendent perpendiculairement à la ligne de jonction ou axe du raccord. Certaines attaches sont constituées par une épingle en U, tandis que d'autres se présentent sous la forme d'un H constitué de deux épingles en U diamétralement opposées par rapport à la ligne de jonction, et l'ouverture de chaque U est comblée par un bloc de mousse. De même, les espaces compris entre les attaches orientées selon une même direction radiale, et correspondant donc à une même cloison, sont comblés par une cale de remplissage, notamment en mousse, et des intercalaires en tissu imprégné de résine sont interposés entre les différentes attaches. Les cloisons réunies par un tel raccord sont matérialisées par deux feuilles de tissu de verre s'étendant parallèlement à la ligne de jonction et collées latéralement sur les attaches correspondantes, et par un matériau de remplissage, tel qu'une mousse avec inserts d'entretoisement comblant l'espace compris entre ces deux feuilles.

Bien qu'un tel raccord oppose une résistance à l'arrachement mutuel des cloisons qui est très supérieure à celle obtenue par l'utilisation de moyens de raccordement plus classiques, ce raccord a cependant pour inconvénient majeur que l'empilement des attaches alternativement orientées selon les directions des différentes cloisons réunies n'est pas un empilement jointif au niveau des pattes des attaches empilées. Il en résulte, au niveau du raccord et pour chacune des cloisons réunies, une limitation de la section de passage des efforts qui sollicitent cette cloison, et cette section de passage est proportionnelle au nombre des attaches orientées selon la direction de cette cloison, ce nombre n'étant qu'une fraction du nombre total d'attaches de l'empilement. Cela entraîne une concentration des contraintes au niveau de cette section de passage, avec un facteur de charge proportionnel au rapport du nombre total d'attaches de l'empilement au nombre d'attaches orientées selon la direction de la cloison considérée. La transmission des efforts s'effectue donc avec de grandes variations des contraintes dans les cloisons ou parois réunies, au voisinage de la zone de jonction, ce qui est très préjudiciable à une bonne tenue en fatigue de la structure assemblée.

Un autre inconvénient du raccord selon GB-A-2118 905 (demande de brevet FR 82 06.875) est son coût car, si la réalisation des attaches en forme d'épingles en U ou en H peut être mécanisée, donc exécutée en un temps réduit, il n'est est pas de même de la pose de ces attaches dans la structure, qui se fait manuellement, et qui s'accompagne, en plus de la pose des attaches proprement dites, de la pose d'une multitude de cales de formes diverses et d'intercalaires en tissus prédécoupés et enduits de résine.

Le but de l'invention est de remédier aux inconvénients mentionnés ci-dessus, et de proposer une clé de liaison permettant de réaliser des raccords qui assurent des assemblages extrêmement solides des cloisons et parois qu'ils réunissent, avec une résistance notablement supérieure à celle obtenue par les raccords selon la demande de brevet FR précitée, tout en étant d'un prix très inférieur à celui de ces derniers.

L'invention a pour objet une clé de liaison entre un premier élément de structure, du type cloison, paroi ou panneau de cloison ou de paroi, notamment en matériau composite, et au moins un second élément de structure analogue, dont la surface moyenne et celle du premier élément de structure sont concourantes le long d'une ligne de jonction correspondante, et cette clé de liaison se caractérise essentiellement en ce qu'elle comprend:

— une première plaquette, et, pour chaque second élément de structure, une seconde plaquette qui sont allongées, de forme sensiblement parallélépipédique ou prismatique, en un matériau relativement léger et rigide, capable de transmettre les efforts tranchants, et qui sont destinées à être intégrées respectivement dans le premier élément et dans le second élément correspondant de structure et empilées avec respectivement des premières plaquettes et des secondes plaquettes correspondantes d'autres clés de liaison, chaque seconde plaquette étant disposée, par rapport à la première plaquette de la clé de liaison correspondante, de sorte que l'axe longitudinal de la seconde plaquette coupe celui de la première plaquette sur la ligne de jonction correspondante et que la première et la seconde plaquettes présentent deux faces transversales, perpendiculaires à la ligne de jonction, qui sont sensiblement dans deux mêmes plans, de sorte que la seconde plaquette présente une face frontale d'extrémité qui est tournée vers une face latérale plane, interne à la liaison, de la première plaquette,

— un noyau, pour chaque seconde plaquette, le noyau étant en un matériau relativement léger et rigide, capable de transmettre les efforts de compression, et délimité par deux faces transversales planes sensiblement en forme de demi-lune et par deux faces latérales convexes, dont une première présente une courbure moins prononcée que la seconde et a ses génératrices perpendiculaires à celles de ladite seconde face latérale convexe, ledit noyau étant disposé entre la première plaquette et la seconde plaque correspondante de sorte que ses faces transversales soient sensiblement dans les deux mêmes plans que les faces transversales des première et seconde plaquettes, que sa première face latérale convexe soit contre la face latérale interne de la première plaquette et que sa seconde face latérale convexe soit tournée vers ladite face frontale d'extrémité de la seconde plaquette, et, pour chaque noyau,

— un premier et un second ruban de stratifils unidirectionnels de fibres ou fils minéraux ou organiques à haute résistance mécanique et imprégnés d'une résine polymérisable, les rubans formant deux boucles en U imbriqués l'un dans l'autre, entourant le noyau, et entre les branches desquels sont insérées la première et la seconde plaquette correspondantes, de sorte que le premier ruban s'étende sur les deux faces transversales et la seconde face latérale convexe du noyau, ainsi que sur les deux faces transversales et, éventuellement, sur l'autre face latérale plane, externe à la liaison, de la première plaquette, afin de leur être solidarisé par polymérisation de la résine, et que le second ruban s'étende sur la première face latérale convexe du noyau et sur les deux faces latérales planes de la seconde plaquette correspondante, afin de leur être solidarisé par polymérisation de la résine.

Cette clé de liaison met donc en œuvre une pièce principale, de forme standard, appelée noyau, qui est à la base de toutes liaisons entre éléments de structure concourants. De plus, les faces latérales convexes du noyau présentent des rayons d'enroulement des rubans de stratifils qui sont favorables à l'obtention d'une bonne résistance en fatigue, tout en permettant une insertion aisée dans une structure.

Lorsque la surface moyenne de l'un au moins des seconds éléments de structure à raccorder n'est pas perpendiculaire à la surface moyenne du premier élément de structure, la clé de liaison peut également comprendre avantageusement, pour au moins un noyau correspondant, une coiffe délimitée par deux faces transversales planes sensiblement en forme de demi-lune, et par deux faces latérales, dont une première est convexe mais dont la seconde est concave et sensiblement complémentaire de la seconde face latérale convexe du noyau correspondant, la coiffe étant disposée entre le noyau et la seconde plaquette correspondante, de sorte qu'elle soit partiellement logée dans un évidement concave délimité par la face frontale d'extrémité de la seconde plaquette correspondante qui est tournée vers la première plaquette, que sa face latérale convexe prolonge au moins partiellement la première face latérale du noyau et soit partiellement entourée par le second ruban correspondant, et enfin que sa face latérale concave soit engagée sur la seconde face latérale convexe du noyau et appliquée contre la portion du premier ruban correspondant qui la recouvre.

Dans une forme de réalisation avantageuse, qui simplifie la réalisation industrielle du noyau, et donne d'excellentes performances en ce qui concerne la résistance en fatigue, les deux faces latérales convexes d'un noyau sont des faces semi-cylindriques, la première face convexe ayant un rayon de courbure qui est sensiblement égal à la moitié de la largeur du premier ruban correspondant, et qui est supérieur au rayon de courbure de la seconde face convexe, qui est lui-même sensiblement égal à la moitié de la largeur du second ruban correspondant.

Lorsque la clé de liaison comprend une coiffe coopérant avec l'un de ses noyaux, pour les mêmes raisons que ci-dessus, et afin que les surfaces sur lesquelles sont enroulés les premier et second rubans correspondants ne présentent pas de solution de continuité, il est avantageux que la coiffe présente la forme d'un demi-tronc de cylindre, dans lequel la face latérale concave est délimitée par un évidement diamétral semi-cylindrique d'axe perpendiculaire à l'axe du tronc de cylindre et de rayon sensiblement égal à la moitié de la hauteur du tronc de cylindre. Compte tenu de la forme cylindrique continue qui est alors présentée par la surface latérale de l'ensemble constitué du noyau et de la coiffe en position de coopération, on comprend que l'axe longitudinal de la seconde plaquette correspondante et du second ruban qui s'étend sur les faces latérales de celle-ci puisse prendre n'importe quelle direction par rapport à l'axe longitudinal des deux branches du premier ruban correspondant. De plus, afin d'éviter que ce premier ruban correspondant soit sollicité autrement que suivant l'axe longitudinal ou de symétrie de ses branches, la clé de liaison comprend de plus avantageusement, au niveau d'une seconde plaquette dont l'axe longitudinal n'est pas perpendiculaire à celui de la première plaquette, un troisième ruban de stratifils imprégnés de résine polymérisable qui recouvre en partie, d'une part, la portion du second ruban qui s'étend sur une face latérale de la seconde plaquette et sur le noyau, d'un côté de l'axe longitudinal de la seconde plaquette, et, d'autre part, la face latérale interne de la première plaquette, de l'autre côté de l'axe longitudinal de la seconde plaquette.

Afin d'augmenter la rigidité et la résistance aux efforts d'un raccord constitué par l'empilement de plusieurs clés de liaison selon l'invention, tout en limitant le poids des clés de liaison utilisées, la première plaquette de chacune est avantageusement conformée en caisson de longeron interne au premier élément de structure lié par le raccord, et ce caisson de longeron comporte une âme en mousse disposée entre deux semelles latérales constituées chacune d'au moins une bande de stratifils unidirectionnels minéraux ou organiques agglomérés par une résine polymérisable et s'étendant parallèlement à la direction longitudinale de l'âme. Pour les mêmes raisons de rigidité et de résistance aux efforts vis-à-vis d'un second élément de structure lié par le raccord correspondant à un premier élément de structure, il est également avantageux que chaque seconde plaquette d'une clé de liaison selon l'invention soit une pièce stratifiée constituant une âme destinée à faire suite à une âme du second élément de structure correspondant, les deux branches du second ruban qui sont solidarisées par polymérisation de la résine aux faces latérales de l'âme stratifiée constituant alors des semelles latérales formant avec cette âme un caisson de longeron pour le second élément de structure. De plus, la première plaquette d'une clé de liaison et, de préférence, également chacune des secondes plaquettes de cette même clé de liaison présentent un enroulement externe de tissu de fibres orientées à 90°, à + 45° et à − 45° par rapport à l'axe longitudinal de la plaquette correspondante.

Lorsque la clé de liaison est destinée à participer à la constitution d'un raccord d'un premier élément de structure et d'au moins un second élément de structure qui ne sont pas perpendiculaires l'un à l'autre, il est avantageux que la clé de liaison comprenne de plus au moins une cale de blocage angulaire de la seconde plaquette correspondante par rapport à la première, avant polymérisation de la résine, la cale de blocage étant insérée dans l'un des évidements délimités entre, d'une part, la face latérale interne de la première plaquette et, d'autre part, la première face latérale convexe du noyau correspondant et/ou une face latérale de la seconde plaquette.

Afin d'obtenir un raccord constitué d'un empilement jointif de clés de liaison selon l'invention, il est de plus avantageux que, sur chacune des clés de liaison de l'empilement, l'une au moins des faces transversales de la première plaquette présente, pour au moins une seconde plaquette, mais de préférence pour chacune d'elles, un évidement transversal à fond plat dans lequel se loge une branche du premier ruban correspondant. Il est possible de parvenir au même résultat, sans pratiquer d'évidement dans les faces transversales de la première plaquette, si l'on prévoit au moins une cale de compensation de l'épaisseur d'un premier ruban, cette cale étant destinée à être disposée sur une face transversale de l'une des plaquettes, afin d'être intercalée entre des plaquettes dans un empilement de clés de liaison.

Dans une autre variante, qui permet de réaliser un empilement pratiquement jointif de clés de liaison sans avoir à prévoir d'évidement dans les faces transversales des premières plaquettes ni de cale de compensation de l'épaisseur du premier ruban à placer sur les faces transversales des premières plaquettes, il est possible d'utiliser des premiers rubans qui sont très larges et peu épais. Dans ce cas, afin de permettre la liaison des secondes plaquettes d'un empilement de clés à un second élément de structure dont l'épaisseur ne doit pas être aussi importante que la largeur des premiers rubans, les secondes plaquettes correspondantes sont telles que, pour chacune d'elles, les deux faces latérales convergent l'une vers l'autre du côté opposé au noyau correspondant.

L'invention a également pour objet un raccord destiné à assurer un assemblage extrêmement solide d'un premier élément de structure, du type cloison, paroi, ou panneau de cloison ou de paroi, notamment en matériau composite, avec au moins un second élément de structure analogue, dont la surface moyenne et celle du premier élément de structure sont concourantes le long d'une ligne de jonction correspondante, et le raccord selon l'invention se caractérise en ce qu'il comprend au moins un empilage de plusieurs clés de liaison telles que définies ci-dessus, dont la résine a été polymérisée, ou reste à polymériser avec tout l'ensemble structural et dont les premières plaquettes empilées forment une armature du premier élément de structure qui est solidarisée entre deux remplissages pris en sandwich avec l'armature, au niveau de la jonction avec un second élément de structure, entre d'une part, un revêtement extérieur appliqué contre les faces latérales externes des premières plaquettes empilées et les faces latérales qui leur font suite sur les deux remplissages, et, d'autre part, deux revêtements intérieurs appliqués chacun d'un côté des premiers rubans correspondants de l'empilage contre les faces latérales internes des premières plaquettes empilées et la face latérale qui leur fait suite sur le remplissage du côté correspondant, les deux revêtements intérieurs étant reliés l'un à l'autre par les portions des faces latérales internes des premières plaquettes qui passent entre les deux branches des premiers rubans correspondants de l'empilage, et délimitant entre eux une ouverture de passage des secondes plaquettes empilées, qui forment une arête massive en bout de laquelle est solidarisé un remplissage du second élément de structure correspondant, qui comporte également deux revêtements latéraux appliqués chacun d'un côté de l'arête massive contre la face latérale du remplissage et les branches des seconds rubans correspondants de l'empilage qui sont situés sur le côté correspondant de l'arête massive.

Avantageusement, lorsque les premiers rubans sont d'une épaisseur relativement faible, au moins au niveau de la jonction avec un second élément de structure, il est possible d'obtenir un empilage jointif des premières plaquettes du raccord, sans avoir à disposer de cale de compensation d'épaisseur ni à aménager d'évidement dans les faces transversales des premières plaquettes, en obtenant que les branches des premiers rubans correspondants soient incrustées dans les faces transversales des premières plaquettes sous l'effet de la pression d'empilage des clés de liaison.

Dans le cas d'un raccord destiné à relier un premier élément de structure et au moins un second élément de structure qui ne soient pas perpendiculaires l'un à l'autre, il est avantageux qu'au moins 'une cale de grande longueur, pour le blocage angulaire de secondes plaquettes empilées et des noyaux correspondants par rapport aux premières plaquettes empilées et/ou pour arrondir un angle formé entre lesdites premières et secondes plaquettes empilées, soit insérée dans ledit angle et recouverte d'un revêtement de couverture continu s'étendant, sur le côté correspondant des axes longitudinaux des secondes plaquettes empilées, sur les branches des seconds rubans recouvrant les faces latérales correspondantes des secondes plaquettes empilées et sur les faces latérales internes des premières plaquettes empilées et/ou sur un revêtement recouvrant au moins partiellement ces faces latérales internes.

De plus, au niveau d'une telle liaison entre deux éléments de structure non perpendiculaires l'un à l'autre, et lorsque les clés de liaison empilées comprennent un troisième ruban de stratifils tel que présenté ci-dessus, il est avantageux, pour assurer une bonne distribution des efforts, que les troisièmes rubans des différentes clés empilées recouvrent alternativement, d'une clé de liaison à l'autre de l'empilage, d'une part, les branches des seconds rubans s'étendant sur les faces latérales des secondes plaquettes empilées, et, d'autre part, les faces latérales internes des premières plaquettes empilées qui sont alternativement d'un côté et de l'autre des axes longitudinaux desdites secondes plaquettes empilées.

D'autres avantages et caractéristiques de l'invention ressortiront de la description donnée ci-après, à titre non limitatif, en référence aux dessins annexés sur lesquels:

la fig. 1 est une vue en perspective d'un noyau pour une clé de liaison selon l'invention,

la fig. 1a est une vue en coupe transversale de la fig. 1,

la fig. 2 est une vue en perspective d'un attelage d'un noyau selon la fig. 1 et de deux rubans de stratifils, pour une clé de liaison selon l'invention,

la fig. 3 est une vue en perspective d'un premier exemple de clé de liaison en forme de T pour le raccordement de deux éléments de structure perpendiculaires,

la fig. 4 est une vue en perspective d'une clé de liaison en T incliné ou en Y pour le raccordement de deux éléments de structure non perpendiculaires l'un à l'autre,

la fig. 5 est une vue en perspective avec arrachement partiel et coupe partielle d'un raccord constitué par empilage de clés de liaison selon la fig. 3 pour le raccordement de deux éléments de structure perpendiculaires,

la fig. 6 est une vue en bout selon la flèche F de la fig. 5, et avec arrachement partiel,

la fig. 7 est une vue schématique en coupe selon VII-VII de la fig. 6,

la fig. 8 est une vue schématique en coupe transversale d'une variante de raccord de deux éléments de structure perpendiculaires,

la fig. 9 est une vue en perspective d'un noyau selon la fig. 1 et d'une coiffe correspondante,

la fig. 10 est une vue en coupe du noyau et de la coiffe de la fig. 9 ainsi que d'un premier ruban pris en sandwich en position de coopération de la coiffe et du noyau,

la fig. 11 est une vue schématique en perspective d'un attelage comprenant le noyau et la coiffe des fig. 9 et 10 ainsi que deux rubans,

la fig. 11a est un schéma de composition des forces qui s'exercent sur un attelage selon la fig. 11,

la fig. 12 est une vue schématique en coupe au travers d'un raccord constitué par l'empilage de clés de liaison comportant l'attelage de la fig. 11 pour le raccordement de deux éléments de structure non perpendiculaires l'un à l'autre,

la fig. 13 représente partiellement en perspective, et avec arrachement partiel, un raccord de quatre éléments de structure différents, et

la fig. 14 représente une autre variante de clé de liaison selon l'invention.

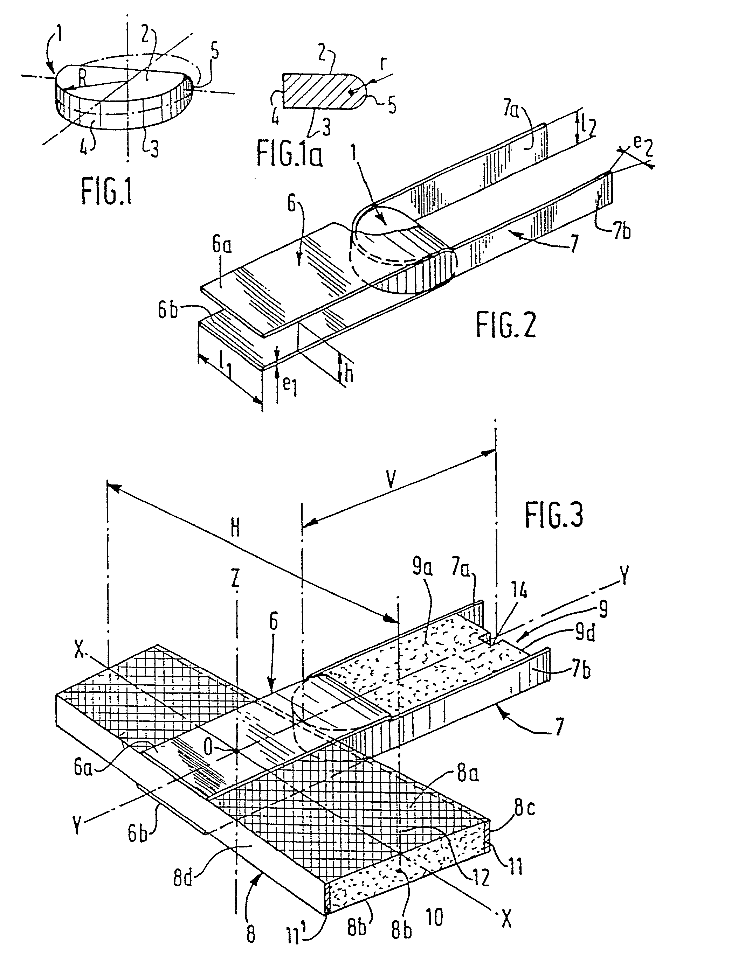

La fig. 1 représente un noyau 1 de forme standard en un matériau relativement rigide, capable de transmettre les efforts de compression, tel que le bois, une matière plastique ou un matériau composite. Sa forme est celle d'un demi-tronc de cylindre droit de section circulaire, dont la face diamétrale a été arrondie de sorte qu'il est délimité entre deux faces transversales 2 et 3, parallèles l'une à l'autre et chacune en demi-lune, et par deux faces latérales convexes, dont l'une 4, correspondant à la face latérale du demi-tronc de cylindre, est perpendiculaire aux faces 2 et 3, a une largeur égale à la hauteur du demi-tronc de cylindre et a un rayon de courbure R égal au rayon du demi-tronc de cylindre et supérieur au rayon de courbure r (égal à la moitié de la hauteur ou épaisseur du noyau 1) de la seconde face convexe 5, qui raccorde les faces transversales 2 et 3, comme visible sur la coupe de la fig. 1*a*. Le noyau 1 peut être allégé intérieurement à condition que ses faces transversales 2 et 3 et latérales 4 et 5 ne présentent ni évidement ni aspérité, et soient bien régulières et lisses.

Sur la fig. 2, on a représenté un premier et un second ruban, respectivement 6 et 7, de stratifils unidirectionnels de verre, de carbone ou d'une fibre aramide, telle que celle commercialisée sous le nom de marque de KEVLAR, et préimprégnés d'une résine synthétique polymérisable. Le premier ruban 6, d'épaisseur $e_1$ et de largeur $l_1$ égale au double du rayon de courbure R de la face latérale convexe 4 du noyau 1, est un ruban rectangulaire replié de manière à former une boucle non fermée en U entourant le noyau 1 en s'étendant sur les deux faces transversales 2 et 3 ainsi que sur la face latérale convexe 5 de ce dernier, et tel que ses deux branches libres et égales $6_a$ et $6_b$ s'étendent parallèlement l'une à l'autre en étant séparées d'une distance h égale à l'épaisseur du noyau 1 ou largeur de la face convexe 4 de ce dernier. Le second ruban 7, d'épaisseur $e_2$ et de largeur $l_2$ égale au double du rayon de courbure r de la face convexe 5, ou encore à l'épaisseur du noyau 1, c'est-à-dire à la distance h, est également un ruban rectangulaire replié de manière à former une boucle en U entourant le noyau 1 en s'étendant sur la face transversale convexe 4 et telle que ses deux branches libres et égales $7a$ et $7b$ s'étendent parallèlement l'une à l'autre, en étant séparées d'une distance égale à la largeur $e_1$ du premier ruban 6. L'ensemble formé par le noyau 1 et les deux rubans 6 et 7 imbriqués l'un dans l'autre et autour du noyau, et qui coopèrent de la manière décrite ci-dessus, constitue un attelage (représenté sur la fig. 2) qui peut être soumis à des efforts de traction dont la valeur est fonction de la section des rubans 6 et 7. Par exemple, si les bandes de stratifils dans lesquelles les rubans 6 et 7 ont été découpés sont capables de transmettre 800 MPa, et que les largeurs $l_1$ et $l_2$ sont respectivement de 30 et 15 mm pour une épaisseur $e_1$ de 1 mm et $e_2$ de 2 mm, l'effort transmis sera de 4800 daN.

On réalise une clé de liaison en insérant entre les branches libres $6_a$ et $6_b$ du premier ruban 6 et entre les branches libres $7_a$ et $7_b$ du second ruban 7 respectivement une première et une seconde plaquette 8 et 9, de forme parallélépipédique, en un matériau capable de supporter et de transférer les efforts tranchants et, de plus, relativement léger, tel que le bois, le liège, une matière plastique ou un matériau composite. Ces plaquettes, prises chacune en sandwich entre deux branches d'un ruban de stratifils préimprégnés d'une résine polymérisable et qui seront solidarisées au ruban par la polymérisation de la résine, sont destinées à être empilées avec les plaquettes d'autres clés analogues et insérées dans un élément de structure, tel qu'une cloison ou une paroi.

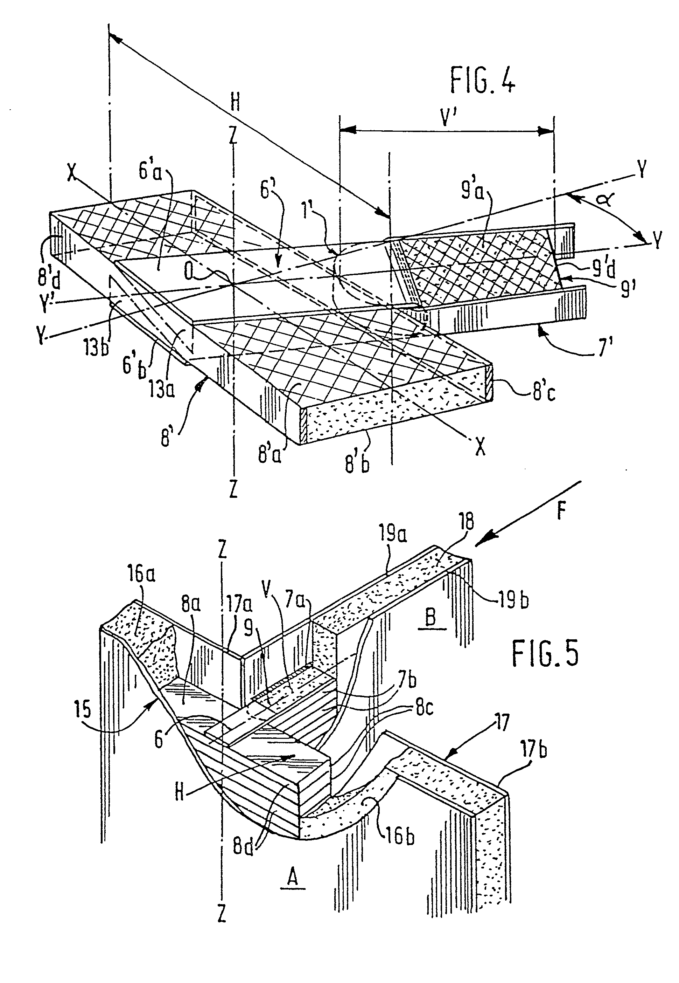

Sur la fig. 3, on a représenté une clé de liaison pour le raccordement de deux cloisons perpendiculaires l'une à l'autre, et cette clé comprend l'attelage de la fig. 2 associé à deux plaquettes 8 et 9 parallélépipédiques. La plaquette 8, insérée entre les branches du ruban 6, a une épaisseur qui est égale à la largeur $l_2$ du second ruban 7, et très inférieure à sa propre largeur, et cette plaquette 8 est disposée de sorte que son axe longitudinal X-X soit perpendiculaire à la direction longitudinale des branches $6_a$ et $6_b$ du ruban 6, c'est-à-dire aussi à l'axe longitudinal Y-Y de la seconde plaquette 9, insérée entre les branches $7_a$ et $7_b$ du second ruban 7, et dont la largeur est égale à la largeur $l_1$ du ruban 6, tandis que son épaisseur est comprise entre la largeur $l_2$ du ruban 7 et cette largeur $l_2$ augmentée de deux fois la valeur de l'épaisseur $e_1$ du ruban 6, afin d'obtenir un empilage jointif des secondes plaquettes 9, comme expliqué ci-dessous. Dans ce montage, les branches $6_a$ et $6_b$ du ruban 6 s'étendent transversalement sur les faces transversales $8_a$ et $8_b$ de la plaquette 8, qui est appliquée par sa face latérale $8_c$, appelée face latérale interne, contre la portion du ruban 7 qui entoure le noyau 1 le long de sa face convexe 4, tandis que les branches $7_a$ et $7_b$ du ruban 7 s'étendent longitudinalement sur les faces latérales parallèles de la plaquette 9, qui est appliquée, par une face plane et frontale d'extrémité tournée vers la face latérale interne $8_c$ de la plaquette 8, contre la portion du ruban 6 qui entoure le noyau 1 sur sa face convexe 5.

En reprenant l'exemple numérique présenté ci-dessus et en admettant que la tenue en cisaillement de la résine après polymérisation soit de 30 MPa, la surface de contact des rubans 6 et 7 avec les plaquettes 8 et 9 par lesquelles transitera l'effort transmis de 4800 daN sera de 1600 mm², soit 800 mm² par ruban 6 ou 7, ce qui, compte tenu de la largeur des rubans 6 et 7, n'impose pas de grandes longueurs des branches libres des rubans. De plus, cette longueur peut encore être réduite si l'on utilise des résines de conception récente dont la teneur en cisaillement atteint 50 MPa. Cette capacité de transmission d'efforts en traction-compression des rubans 6 et 7 est exploitée par les plaquettes 8 et 9, dont les faces transversales sont sensiblement dans deux mêmes plans parallèles (la face transversale supérieure $8_a$ de la plaquette 8 et la face transversale $9_a$ supérieure de la plaquette 9 sont sensiblement dans le même plan, tandis que les faces transversales inférieures de ces plaquettes sont sensiblement dans un autre plan parallèle).

La plaquette 8, qui reçoit les efforts du ruban 6, se comporte comme un longeron auquel on applique un effort suivant l'axe Y-Y. Pour cette raison, la plaquette 8 présente une structure de caisson de longeron interne à la cloison porteuse dans laquelle elle est destinée à être intégrée. La plaquette 8 comporte une âme pleine 10, constituée par un pain parallélépipédique de mousse de polyuréthanne par exemple, et cette âme 10 est prise en sandwich entre deux semelles 11 et 11' s'étendant le long des faces latérales interne et externe de l'âme 10. Chaque semelle 11 et 11' est constituée d'une bande de stratifils unidirectionnels en fibres minérales ou organiques (verre, carbone, KEVLAR) s'étendant parallèlement à l'axe X-X et préimprégnés d'une résine polymérisable, et les semelles 11 et 11' sont maintenues en place contre l'âme 10 par un revêtement 12 constitué de couches de tissus de fils également minéraux ou organiques, préimprégnés de résine polymérisable, et dont les fils sont croisés à $\pm$ 45° et à 90° par rapport à l'axe X-X. Les faces transversales $8_a$ et $8_b$ sont donc formées par ces couches de tissus croisés sur l'âme 10 en mousse, tandis que les faces latérales interne $8_c$ et externe $8_d$ de la plaquette 8 sont formées par ces couches de tissus croisés recouvrant les semelles respectivement interne 11 et externe 11'.

La plaquette 8 peut être obtenue par moulage sous pression de son âme 10 entre deux semelles 11 et 11' disposées dans une enveloppe formée par les tissus croisés 12 et elle-même disposée dans un moule. Mais il est également possible d'obtenir la plaquette 8 par emboutissage ou tronçonnage d'une barre de structure correspondante et en matériaux adéquats, compte tenu du grand nombre de plaquettes nécessaires et de la répétitivité d'emploi dans une même structure.

La plaquette 9 est une pièce stratifiée, également enveloppée d'un revêtement constitué de couches de tissus de fils minéraux ou organiques préimprégnés de résine polymérisable, et dont les fils sont croisés à $\pm$ 45° et à 90° par rapport à l'axe Y-Y, afin de transmettre les efforts tranchants, et la plaquette 8 constitue une âme destinée à faire suite à une âme de la cloison dans laquelle elle doit être intégrée, et cette plaquette 9 est prise en sandwich entre deux semelles formées par les deux branches $7_a$ et $7_b$ du ruban 7. La plaquette 9 et les deux branches de ruban $7_a$ et $7_b$ forment ainsi respectivement l'âme et les deux semelles d'un longeron solidaire du noyau 1.

On obtient ainsi une clé de liaison en forme de T, dont les branches «horizontale» H et «verticale» V sont perpendiculaires et correspondent respectivement à la plaquette 8 et à la plaquette 9 prolongée du noyau 1 (voir fig. 3) et qui convient au raccordement de deux cloisons perpendiculaires l'une à l'autre, et dont les surfaces moyennes se coupent au point de concours des axes X-X et Y-Y.

Pour raccorder des cloisons non perpendiculaires l'une à l'autre, on peut utiliser des clés de liaison analogues, telles que celle représentée sur la fig. 4, et qui comportent les mêmes organes que la clé de liaison de la fig. 3, repérés par les mêmes références mais affectés d'un symbole prime. La clé de liaison de la fig. 4 est une clé en forme de T incliné dont la branche V' est inclinée d'un angle α sur la perpendiculaire à la branche «horizontale» H'. Dans cette variante, on retrouve que la branche V' est formée par une plaquette 9' et un noyau 1' latéralement entourés par un ruban 7', que la branche H' est formée essentiellement par une plaquette 8', et que la branche V' est liée à la branche H' par un ruban 6', replié en U, dont les branches $6'_a$ et $6'_b$ s'étendent sur les faces transversales $8'_a$ et $8'_b$ de la plaquette 8', et qui passe sur les faces transversales du noyau 1' et sur la face latérale convexe de ce dernier qui est tournée vers la plaquette 9'. Mais, dans ce cas, l'axe longitudinal Y'-Y' de la plaquette 9', qui est également l'axe de symétrie du ruban en U 7' et du noyau 1', est incliné d'un angle α sur l'axe Y-Y (perpendiculaire à l'axe longitudinal X-X de la plaquette 8') et coupe l'axe Y-Y au point de concours O des deux axes Y-Y, ce qui peut être très simplement obtenu en faisant rouler contre la face latérale interne $8'_c$ de la plaquette 8' et jusqu'à la position angulaire souhaitée, le noyau 1' d'un attelage analogue à celui de la fig. 2 et dans lequel la plaquette 9' a été mise en place. De ce fait, les branches $6'_a$ et $6'_b$ du ruban 6' sont également inclinées de sorte que leur axe de symétrie, confondu avec l'axe Y'-Y' soit incliné de l'angle α sur l'axe Y-Y. On peut ainsi faire concourir les axes des deux branches H' et V' de la clé de liaison au centre de symétrie O de la branche H'. Les extrémités des branches $6'_a$ et $6'_b$ du ruban 6' peuvent être coupées en biais pour longer les arêtes respectivement supérieure et inférieure de la face latérale externe $8'_d$ de la plaquette 8', mais il est également possible que les branches $6'_a$ et $6'_b$ demeurent rectangulaires et que des rabats triangulaires $13_a$ et $13_b$, délimités par les parties d'extrémité des branches de rubans $6'_a$ et $6'_b$ qui dépassent au-delà des arêtes respectivement supérieure et inférieure de la face latérale externe $8'_d$ de la plaquette 8', soient rabattus et appliqués contre cette face latérale externe $8'_d$, comme représenté en traits interrompus sur la fig. 4. Cela a pour effet de renforcer l'ancrage du ruban 6' sur la plaquette 8', et le même avantage peut être obtenu sur la clé de la fig. 3, en prolongeant les branches $6_a$ et $6_b$ du ruban 6, de sorte que des parties d'extrémité substantielles puissent être repliées et appliquées contre la face latérale externe $8_d$ de la plaquette 8. De même, on peut améliorer l'ancrage des rubans 7 et 7' respectivement sur les plaquettes 9 et 9', en repliant les parties d'extrémité des branches de rubans telles que $7_a$ et $7_b$, l'une vers l'autre et en les appliquant contre la face frontale d'extrémité $9_d$ ou $9'_d$ de la plaquette 9 ou 9' qui est tournée du côté opposé au noyau 1 ou 1'.

De plus, et avant la polymérisation de la résine, les rubans peuvent être maintenus chacun en place autour de la plaquette correspondante en rabattant les extrémités libres de leurs branches dans une encoche ménagée dans une face de la plaquette et en les coinçant dans cette encoche à l'aide d'une cale appropriée. Par exemple, sur la clé de liaison de la fig. 3, une encoche 14 est ménagée dans la face frontale d'extrémité $9_d$ de la plaquette 9, et les extrémités des branches $7_a$ et $7_b$ du ruban 7 peuvent être rabattues contre cette face frontale $9_d$ et engagées dans l'encoche 14, dans laquelle elles sont éventuellement retenues par coincement à l'aide d'une cale non représentée.

Les clés de liaison représentées sur les fig. 3 et 4 sont destinées à être empilées avec des clés analogues, en superposant les plaquettes 8 ou 8' et 9 ou 9' par leurs faces transversales, telles que $8_a$, $8_b$ et $9_a$ ou $8'_a$, $8'_b$ et $9'_a$, et de sorte que les points O, où se coupent les axes longitudinaux X-X et Y-Y ou X-X et Y'-Y' de deux plaquettes de chaque clé, soient situés sur la ligne de jonction le long de laquelle se couperont les surfaces moyennes des cloisons à réunir par le raccord constitué par l'empilement des clés, cette ligne de jonction étant l'axe Z-Z des fig. 3 et 4 dans le cas de deux cloisons planes.

En empilant ainsi des clés telles que représentées sur les fig. 3 ou 4, on obtient un raccord présentant deux pans divergents très solidement liés l'un à l'autre par les attelages de rubans et constitués l'un par l'empilement des plaquettes 8 ou 8' et l'autre par l'empilement des plaquettes 9 ou 9', et ces deux pans divergents forment des attaches en attente ou amorces de cloisons, sur lesquelles on vient solidariser des cloisons proprement dites ou des panneaux constitutifs de ces cloisons. Il suffit pour cela de monter les cloisons ou panneaux de cloisons dans le prolongement des attaches en attente, de préférence au cours du montage des panneaux ou de la fabrication des cloisons, comme cela est décrit ci-dessous en référence à la fig. 5.

La fig. 5 représente la liaison d'une cloison B, par exemple une cloison verticale interne d'un bateau, à un panneau de structure A, tel qu'un bordé de la coque de ce bateau, la cloison B étant perpendiculaire au bordé A, et le raccord en T qui les relie est constitué par l'empilement de clés de liaison en T selon la figure 3.

Le montage s'effectue de la manière suivante: des clés identiques à celle de la fig. 3 sont empilées de sorte que leurs branches H soient superposées en présentant leurs faces latérales externes $8_d$ dans un même plan externe, leurs faces latérales internes $8_c$ dans un même plan interne, et leurs faces frontales d'extrémité dans deux plans transversaux, parallèles l'un à l'autre et tous deux perpendiculaires aux plans interne et externe. De même, les branches V sont ainsi superposées que leurs branches de ruban $7_a$ et $7_b$ s'étendent dans deux plans latéraux, parallèles l'un à l'autre et perpendiculaires au plan dans lequel s'étendent les faces frontales d'extrémité $9_d$ des plaquettes 9 correspondantes. Les faces latérales externes $8_d$ des branches H des clés empilées sont plaquées contre la face interne de la paroi de revêtement externe 15 du panneau A. Cette paroi de revêtement externe 15 peut être constituée en un matériau léger, tel qu'une matière plastique ou du bois, mais, selon un mode de réalisation particulièrement avantageux, elle est constituée par une feuille ou «peau» réalisée notamment en un ou plusieurs couches, de préférence croisées, de tissus de fibres minérales ou organiques et préimprégnés d'une résine synthétique polymérisable, ou en une résine synthétique polymérisable et armée de fibres minérales ou organiques, telles que des fibres de verre. Le raccord formé par l'empilage des clés en T suivant l'axe Z-Z constitue une armature et une base sur laquelle sont successivement fixés, par exemple par collage ou polymérisation de la résine d'imprégnation, des blocs $16_a$ et $16_b$ d'un matériau solide de remplissage du panneau A, puis les deux éléments $17_a$ et $17_b$ de la paroi de revêtement interne 17 du panneau A. Les matériaux des blocs de remplissage $16_a$ et $16_b$, pris en sandwich entre les deux revêtements 15 et 17 parallèles l'un à l'autre, peuvent être une mousse en polyuréthanne dans laquelle sont éventuellement noyées des pièces rigides d'entretoisement ou d'écartement, tandis que les éléments de revêtement internes $17_a$ et $17_b$ sont d'une constitution identique à celle du revêtement externe 15.

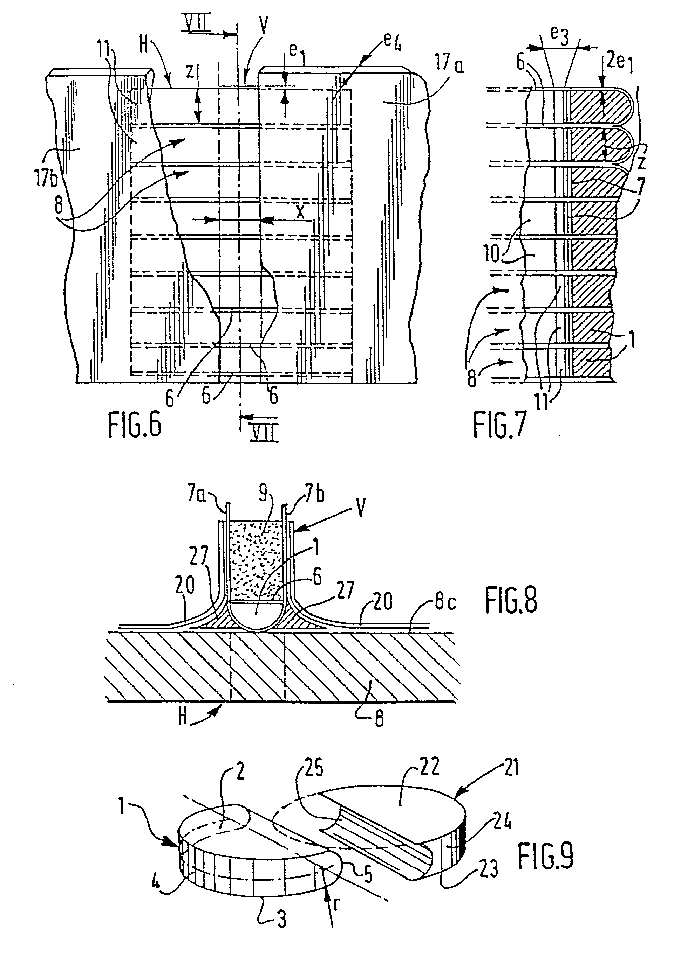

Comme cela ressort clairement de la fig. 5, chacun des blocs de remplissage $16_a$ et $16_b$ est collé à la fois contre la face interne du revêtement externe 15 et contre les faces frontales d'extrémité, situées d'un même côté et dans un même plan transversal, des plaquettes 8 empilées. De même, chacun des éléments de revêtement internes $17_a$ et $17_b$ est collé à la fois contre la face interne respectivement du bloc $16_a$ ou $16_b$ et contre la partie des faces latérales internes $8_c$ des plaquettes 8 empilées qui est située du côté correspondant des rubans 6. Dans ces conditions, et comme représenté sur la fig. 6, le panneau A, vu suivant la flèche F de la fig. 5, présente, entre les éléments de revêtement internes $17_a$ et $17_b$, une ouverture de largeur $x$ à travers laquelle passent les branches V des clés empilées. L'ensemble des branches V empilées forme une arête massive sur laquelle on vient fixer par collage la cloison B. Celle-ci est constituée d'un bloc de remplissage 18, par exemple de même nature que les blocs $16_a$ et $16_b$ du panneau A, et qui est collé en bout des plaquettes 9 empilées, contre les faces frontales d'extrémité $9_d$ de ces dernières, et ce bloc de remplissage 18 est également en sandwich entre deux peaux de revêtement latéral $19_a$ et $19_b$ ayant chacune par exemple la même constitution que les revêtements 15 et 17 du panneau A. Chacun des revêtements latéraux $19_a$ et $19_b$ est collé contre la face latérale correspondante du bloc 18 et contre respectivement les branches de ruban $7_a$ et $7_b$ s'étendant sur les faces latérales correspondantes des plaquettes 9 empilées.

Le raccord, formé par les clés en T empilées, et intégré dans le panneau A par les branches H des clés, est lié par les branches V de ces clés à la cloison B, en dehors de la zone de concours des surfaces moyennes du panneau A et de la cloison B.

Il est à noter que l'ouverture de largeur $x$ entre les éléments de revêtement internes $17_a$ et $17_b$ n'empêche pas les transmissions d'effort entre ces éléments de revêtement, car les bandes de stratifils des semelles latérales internes 11 des plaquettes 8 empilées relient ces éléments de revêtement $17_a$ et $17_b$ par collage, et assurent ces transferts d'effort à travers les branches V des clés en passant, pour chaque clé, entre les branches $6_a$ et $6_b$ du ruban en U 6 correspondant.

Sur la fig. 6, qui représente le panneau A selon la flèche F de la fig. 5 avant le montage de la cloison B, et sur la fig. 7 qui est une coupe verticale et rabattue de la fig. 6, il apparaît que la section résistante de la portion manquante du revêtement interne 17 (entre les éléments $17_a$ et $17_b$) est remplacée par «n» sections des semelles 11 de largeur z et d'épaisseur $e_3$ (voir fig. 7), si l'empilement comprend n clés.

Si $e_4$ est l'épaisseur constante du revêtement 17, et en rappelant que $e_1$ est l'épaisseur du ruban 6, pour conserver au niveau de chaque clé l'équivalent de la portion de revêtement 17 manquant à ce niveau, il faut vérifier l'équation:

$$z \times e_3 = (z + 2e_1) \times e_4.$$

Selon une caractéristique remarquable de cette structure, le rapport

$$\frac{z + 2 \times e_1}{z}$$

est faible et se rapproche de 1, qui est la valeur optimum, correspondant à une absence de discontinuité du milieu par lequel les efforts sont transférés. En effet, en reprenant l'exemple numérique donné ci-dessus, z est égal à la largeur $l_2$ du ruban 7, soit 15 mm, et $e_1$ est égal à 1 mm, donc le rapport

$$\frac{z + 2e_1}{z}$$

est égal à $\frac{17}{15}$, soit 1,133.

Ce qui signifie que le rapport des épaisseurs $e_3/e_4$ est de 1,133. Cette valeur lie l'épaisseur $e_3$ que doit présenter chaque semelle latérale 11 des plaquettes 8 à l'épaisseur $e_4$ prévue pour le revêtement interne 17 du panneau A.

A titre de comparaison, dans une structure selon la demande de brevet français 82 06.875 qui est équilibrée sur le plan de la répartition des efforts entre les deux cloisons raccordées et qui comporte une distribution alternée des attaches dans les directions des deux cloisons, le rapport des épaisseurs correspondantes est de 2.

Dans la structure décrite ci-dessus en référence aux figures 1 à 7, les transmissions d'effort s'effectuent sans que de grandes variations de contrainte se développent dans le panneau A et la cloison B au voisinage de la zone de coupure du revêtement interne 17, même lorsque la structure assemblée travaille en fatigue.

Une autre caractéristique importante de cette structure est la faible épaisseur du ruban 6 (par exemple 1 mm) par rapport à l'épaisseur de la branche H de chaque clé de liaison (par exemple 15 mm) ce qui correspond à la largeur de l'autre ruban 7. De par sa constitution, la branche H de chaque clé de liaison peut aisément se déformer sur ses faces transversales $8_a$ et $8_b$ pour accepter une dénivellation de 1 mm et donc une incrustation des branches $6_a$ et $6_b$ du ruban 6 dans les faces transversales respectivement $8_a$ et $8_b$ de la plaquette 8, sous l'effet de la pression exercée sur les faces externes du ruban 6 lors de l'empilement des clés de liaison. Dans ces conditions, toutes les clés empilées peuvent être placées en contact direct les unes avec les autres par leurs faces transversales, et l'empilement ainsi obtenu est jointif. Si l'épaisseur du ruban 6 de chaque clé de liaison est plus importante et/ou si la branche H de chaque clé est réalisée selon une structure moins déformable que celle décrite ci-dessus, il est alors nécessaire, pour obtenir un raccord à empilement jointif des clés qui le constitue, de compenser l'épaisseur des branches de ruban $6_a$ et $6_b$ par des cales de même épaisseur, réalisées en mousse de polyuréthanne et/ou en tissus de fibres préimprégnés de résine polymérisable, et ayant la même forme rectangulaire que, d'une part, les faces transversales $8_a$ et $8_b$ de la plaquette 8 de part et d'autre des branches de ruban $6_a$ et $6_b$, et, d'autre part, les faces transversales telles que $9_a$ de la plaquette 9. Dans l'empilement du raccord, ces cales sont donc intercalées entre les faces en regard des deux plaquettes de deux clés de liaison contiguës de l'empilement.

Afin d'obtenir un empilement jointif, une autre solution consiste à prévoir, dans chacune des faces transversales $8_a$ et $8_b$ de la plaquette 8, un évidement transversal (par rapport à l'axe longitudinal de la plaquette 8) ayant une largeur légèrement supérieure à celle du ruban 6 et une profondeur sensiblement égale à l'épaisseur du ruban 6, de sorte que chacune des branches $6_a$ et $6_b$ de ce ruban 6 se loge dans l'évidement de la face transversale $8_a$ ou $8_b$ correspondante sans former une saillie sur cette face. Il est également possible de ne prévoir un évidement transversal que dans l'une des faces $8_a$ et $8_b$ de la plaquette 8 mais, dans ce cas, cet évidement a avantageusement une profondeur qui est le double de l'épaisseur du ruban 6, de sorte que cet évidement serve de logement non seulement à la branche correspondante $6_a$ ou $6_b$ du ruban 6 monté sur cette plaquette 8, mais également à la branche de ruban respectivement $6_b$ ou $6_a$ qui est en saillie sur la face transversale sans évidement d'une plaquette 8 contiguë dans l'empilement, ce qui permet de plus un centrage relatif à l'empilage des plaquettes 8. Cependant, ces deux dernières solutions ont pour inconvénient de compliquer et de rendre plus coûteuse la fabrication industrielle des plaquettes.

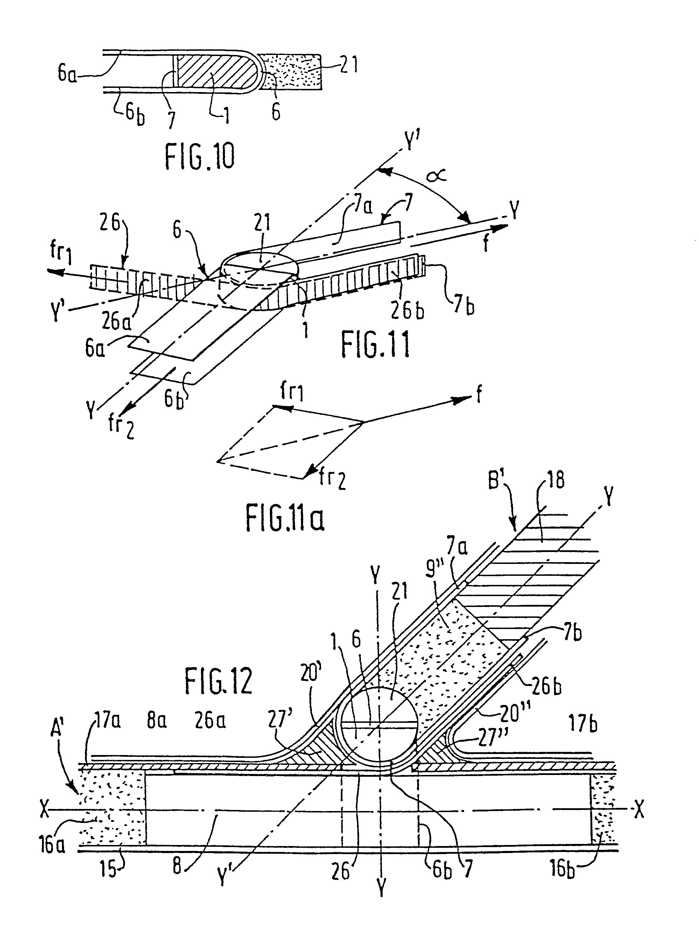

Afin d'améliorer le maintien de la branche B en position convenable vis-à-vis de la branche H de la clé de liaison correspondante, en particulier avant la polymérisation de la résine d'imprégnation, il est indiqué de disposer, dans chacun des deux évidements latéraux délimités entre la face latérale convexe de grand rayon de courbure 4 du noyau 1 et la face latérale interne $8_c$ en regard de la plaquette 8, une cale 27 de blocage angulaire du noyau 1 vis-à-vis de la plaquette 8, comme représenté sur la fig. 8. Chaque cale 27 présente une section transversale sensiblement en forme de triangle ayant un côté rectiligne, destiné à être appliqué contre la face latérale interne $8_c$, et deux côtés concaves destinés l'un à être appliqué contre la partie du ruban 7 qui entoure la face convexe 4 du noyau 1, d'un côté de l'axe de symétrie de ce dernier, et l'autre à arrondir l'angle délimité entre la branche de ruban $7_a$ ou $7_b$ et la portion de la face latérale interne 8$_c$ située du même côté de l'axe de symétrie du noyau 1 que la branche de ruban considérée. Ces cales 27 sont maintenues en position par la pose d'au moins une couche, mais de préférence de plusieurs couches croisées, de tissus de recouvrement 20, en fibres minérales ou organiques et préimprégnés de résine synthétique polymérisable, cette ou ces couches étant disposées contre les branches de ruban 7$_a$ ou 7$_b$ et contre les portions des faces latérales internes 8$_c$ situées sur les côtés correspondants des rubans 6, en recouvrant les cales 27. Ces dernières peuvent être montées sur chaque clé de liaison, mais, de préférence, les cales 27 sont réalisées en éléments de grande longueur qui sont disposés, sans être fractionnés, dans les évidements latéraux délimités dans l'empilement des clés formant un raccord.

Au niveau d'une clé de l'empilement, chacune des cales 27 de la fig. 8 peut être remplacée par deux cales accolées l'une contre l'autre, et dont l'une, particulière à la clé considérée, a une section de forme triangulaire à un côté concave à appliquer contre le ruban 7 qui entoure le noyau 1 et à deux côtés rectilignes dont l'un est à appliquer contre la face latérale 8$_c$ de la plaquette 8 et dont l'autre vient dans le prolongement de la branche de ruban 7$_a$ ou 7$_b$ du côté correspondant, afin que cette première cale vienne remplir l'évidement latéral en forme de coin entre le noyau 1 et la plaquette 8, tandis que la seconde cale est une cale de grande longueur, commune à plusieurs clés de l'empilement, sinon à tout l'empilement, et dont la section est également de forme triangulaire à deux côtés rectilignes dont l'un vient contre la face latérale interne 8$_c$ et l'autre contre la première cale, le troisième côté étant concave pour arrondir l'angle entre les plaquettes V et H, d'un côté des plaquettes V de l'empilement.

Pour décrire une structure propre à l'invention, on a retenu ci-dessus, à titre purement illustratif, l'exemple du raccord en T visible sur les fig. 5 à 7, réalisé à partir de clés de liaison selon la fig. 3 et mis en œuvre pour assurer la jonction d'un panneau A et d'une cloison B dont les surfaces moyennes s'étendent dans deux plans orthogonaux.

Mais il est aussi possible d'assembler plusieurs éléments plans de structure qui forment entre eux des dièdres d'angle quelconque. En particulier, par l'empilage de clés selon la fig. 4, on peut former un raccord pour deux cloisons non perpendiculaires l'une à l'autre. Cependant, il faut, dans ce cas, que sur toutes les clés empilées le ruban 6' soit disposé de sorte que son axe de symétrie soit confondu avec l'axe longitudinal Y'-Y' de la plaquette 9' correspondante, et donc incliné sur l'axe longitudinal X-X de la plaquette 8' correspondante de l'angle du dièdre à former entre les parois ou cloisons à raccorder.

Afin de s'affranchir notamment de cette limitation, il est possible de compléter l'attelage de base représenté sur la fig. 2 en lui ajoutant une autre pièce appelée coiffe, dont la forme et le mode de coopération avec le noyau et les rubans sont décrits ci-dessous en référence aux fig. 9 à 11$_a$.

Sur la fig. 9, on a représenté le noyau 1 des fig. 1 et 2, et la coiffe 21 qui lui est associée. Cette coiffe 21 a très sensiblement la forme du demi-tronc de cylindre droit complémentaire du noyau 1, c'est-à-dire qu'elle a une forme délimitée par deux faces transversales planes 22 et 23, parallèles, en demi-lune de rayon R égal au rayon des faces en demi-lune 2 et 3 du noyau 1, et séparées d'une distance ou épaisseur de coiffe qui est égale au double du rayon r de la face convexe 5 du noyau 1, et la coiffe 21 est également délimitée par deux faces latérales, dont l'une 24, convexe, est une face semi-cylindrique de rayon R, tandis que l'autre 25 est une face concave formée par un évidement diamétral semi-cylindrique de rayon r. De ce fait, la face concave 25 présente une forme complémentaire de la face convexe 5 du noyau 1, et la face convexe 24 vient prolonger la face convexe 4 du noyau 1 pour former une surface latérale cylindrique sensiblement continue lorsque la coiffe 21 est engagée sur le noyau 1, comme représenté en coupe par un plan vertical sur la fig. 10, en prenant en sandwich, entre sa face concave 25 et la face convexe 5 du noyau 1, la portion de ruban 6 qui est enroulée sur cette face convexe 5.

La fig. 11 montre comment les rubans 6 et 7 se placent vis-à-vis du noyau 1 et de la coiffe 21 : le ruban 7 entoure partiellement le noyau 1 et la coiffe 21 en recouvrant une partie de leur surface convexe respectivement 4 et 24, et en passant entre les branches 6$_a$ et 6$_b$ du ruban 6, qui recouvre les faces transversales 2 et 3 du seul noyau 1 et est coincé entre la face convexe 5 de ce dernier et la face concave 25 de la coiffe 21. Compte tenu de la forme cylindrique continue du noyau 1 et de sa coiffe 21, on comprend que le ruban 7 puisse être disposé de sorte que son axe de symétrie Y'-Y', passant entre ses branches 7$_a$ et 7$_b$, prenne n'importe quelle orientation par rapport à l'axe de symétrie Y-Y du ruban 6, et soit incliné d'un angle voulu α sur cet axe Y-Y.

Pour éviter que le ruban 6 soit sollicité autrement que suivant son axe de symétrie Y-Y, il est préférable d'ajouter également à l'attelage, comme représenté sur la fig. 11, un troisième ruban 26 de même nature que les rubans 6 et 7. Ce ruban supplémentaire 26 passe entre les branches 6$_a$ et 6$_b$ du ruban 6 en s'enroulant partiellement, dans sa partie centrale, autour de la portion de ruban 7 qui est appliquée contre la face convexe 4 du noyau 1, et le ruban 26 présente deux branches ou parties d'extrémité dont l'une, telle que 26$_a$ sur la fig. 11, s'étend librement d'un côté du noyau 1, tandis que l'autre, 26$_b$ sur la fig. 11, est appliquée contre la face externe de la branche 7$_b$ du ruban 7 qui est de l'autre côté du noyau 1, par rapport à l'axe Y-Y. Si l'attelage ainsi réalisé est sollicité par une force f s'exerçant selon l'axe Y'-Y' sur le ruban 7, l'équilibre des forces est assuré selon le schéma de la fig. 11$_a$, grâce à la décomposition de la force de réaction en composants de force fr$_1$ et fr$_2$ s'exerçant respectivement selon la branche libre 26$_a$ du ruban 26 et selon l'axe Y-Y du ruban 6. Le décentrage du ruban 26 développe un moment qui ne représente, pour l'attelage, qu'une légère dissymétrie dans les efforts passant par les deux branches $7_a$ et $7_b$ du ruban 7.

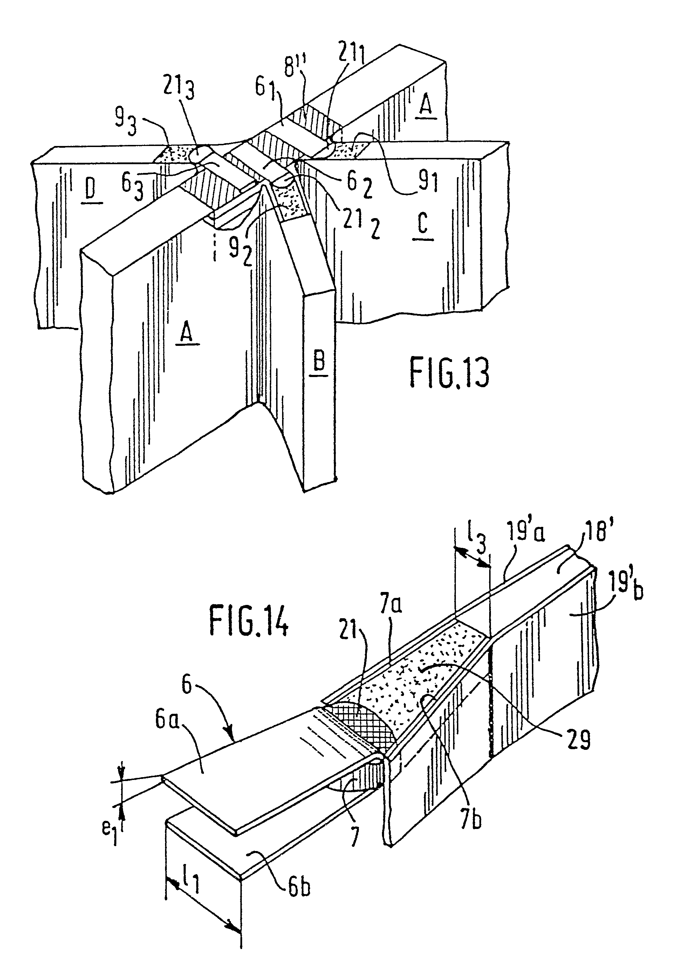

Un exemple de clé de liaison comportant l'attelage de la fig. 11 et d'un montage de telles clés pour former un raccord de liaison du panneau A' et de la cloison B', en position inclinée l'un par rapport à l'autre, est représenté en coupe partielle sur la fig. 12.

Sur cette clé de liaison, on retrouve la plaquette 8 insérée entre les deux branches $6_a$ et $6_b$ du ruban 6, de sorte que son axe longitudinal X-X soit perpendiculaire à l'axe de symétrie Y-Y du ruban 6. Par contre, la plaquette 9″, qui est insérée entre les deux branches $7_a$ et $7_b$ du second ruban 7, présente la même structure que les plaquettes 9 et 9′ des clés des fig. 3 et 4, mais sa forme est différente car sa face frontale d'extrémité tournée vers la plaquette 8 est une face concave délimitée par un évidement semi-cylindrique de rayon légèrement supérieur à R, afin que le noyau 1 et la coiffe 21, qui prennent en sandwich le ruban 6, puissent être partiellement logés sans jeu radial et axial important dans cet évidement. Sur la clé de la fig. 12, la branche $26_a$ du troisième ruban 26 a été appliquée contre la face latérale $8_c$ de la plaquette 8 et l'autre branche $26_b$ contre la branche $7_b$ du ruban 7. Sur cette figure, le noyau 1 a été rendu visible par suppression de la branche supérieure $6_a$ du ruban 6, ce qui laisse également clairement apparaître la portion du ruban 7 qui entoure partiellement le noyau 1 et la coiffe 21, et la portion centrale du ruban 26 qui double le ruban 7. Dans l'empilement de clés analogues formant le raccord, les clés directement contiguës respectivement au-dessus et au-dessous de celle représentée sur la fig. 12 sont telles que la branche $26_a$ de leur ruban 26 est appliquée contre la branche $7_a$ de leur ruban 7, tandis que la branche $26_b$ du ruban 26 est appliquée contre la partie de la face latérale interne $8_c$ de la plaquette 8 qui s'étend à droite de l'axe Y-Y sur la fig. 12. Ainsi, les rubans 26 de l'empilement sont appliqués sur les portions des surfaces latérales internes $8_c$ qui sont situées alternativement d'un côté et de l'autre de l'axe Y-Y des rubans 6. Dans la structure assemblée de la fig. 12, on retrouve que les plaquettes 8 sont empilées et collées contre les deux blocs de remplissage $16_a$ et $16_b$, eux-mêmes pris en sandwich, pour former le panneau A', entre le revêtement externe continu 15 et le revêtement interne en deux éléments $17_a$ et $17_b$, disposés par-dessus les branches $26_a$ et $26_b$ des rubans 26 qui sont appliquées contre les faces $8_c$ des plaquettes 8. On retrouve également que l'âme 18 de la cloison B' est montée en bout des plaquettes 9″ empilées. Des tissus de revêtement latéral 20′ et 20″, analogues aux tissus des revêtements 20 de la fig. 8, recouvrent chacun une face latérale de l'âme 18, et les branches $7_a$ et $7_b$ des rubans 7, les branches $26_a$ ou $26_b$ des rubans 26 qui sont appliquées contre respectivement les branches $7_b$ ou $7_a$ des rubans 7, et les portions des faces latérales internes $8_c$ qui sont d'un côté ou de l'autre des axes Y-Y des rubans 6, en emprisonnant, dans les coins formés entres les plaquettes 8 et les ensembles noyau 1-coiffe 21, respectivement des cales de blocage angulaire 27′ et 27″, qui sont dissymétriques et bloquent les noyaux 1 lorsque la cloison B' exerce un effort de compression dirigé vers le panneau A'.

Sur la fig. 13, on a représenté schématiquement la constitution d'un nœud structural comprenant le panneau principal A, «traversé» par un panneau secondaire formé par les deux cloisons C et D, liées dans le prolongement l'une de l'autre mais indépendamment l'une de l'autre au panneau A, et comprenant enfin la cloison B, concourante aux deux panneaux le long de l'axe de concours de ces deux panneaux. Une telle structure est obtenue en utilisant un raccord triple constitué comme trois raccords adjacents et chacun du type de celui de la fig. 12, mais qui auraient leur plaquette 8 en commun. Sur la fig. 13, on a schématisé un empilement des clés comprenant chacune une plaquette 8″ insérée entre les branches de trois rubans en U $6_1$, $6_2$ et $6_3$, décalés le long de la plaquette 8″ et coopérant avec trois ensembles noyau-coiffe, dont seules les coiffes $21_1$, $21_2$ et $21_3$ sont visibles, et qui sont entourés par des rubans en U entre les branches desquels sont insérées les plaquettes $9_1$, $9_2$ et $9_3$. Les clés sont empilées de sorte que l'empilement des plaquettes 8″ est intégré au panneau A, et les empilements des plaquettes respectivement $9_1$, $9_2$ et $9_3$ sont intégrés respectivement aux cloisons C, B et D, de la manière décrite précédemment en référence à la fig. 12. La clé de liaison selon l'invention offre également la possibilité, à capacité de transmission d'effort constante, c'est-à-dire à section constante des rubans, de réduire l'épaisseur des rubans 6 afin de faciliter l'obtention d'empilements jointifs de clés, sans avoir à augmenter inutilement l'épaisseur de la cloison montée en bout des plaquettes insérées entre les branches des rubans 7, en conséquence de l'augmentation corrélative de la largeur des rubans 6. En effet, comme représenté sur la fig. 14, on peut diminuer l'épaisseur $e_1$ du ruban 6 en augmentant sa largeur $l_1$, afin que sa section reste constante. Cela a pour conséquence qu'il faut utiliser un noyau et une coiffe 21 réalisés dans un tronc de cylindre de plus grand rayon R, mais dont la hauteur reste inchangée, ce qui implique que la largeur et donc aussi l'épaisseur du ruban 7 restent également inchangées. S'il est inutile que l'épaisseur de la cloison d'âme 18′, montée en bout de la plaquette 29 insérée entre les branches de ruban $7_a$, $7_b$, soit supérieure à une valeur $l_3$ qui est inférieure à la largeur de 2R du ruban 6, il suffit d'utiliser une plaquette 29 qui soit de forme prismatique à section trapézoïdale et dont les deux faces latérales convergent l'une vers l'autre du côté de l'âme 18′. La coiffe 21 vient se loger dans un évidement semi-cylindrique ménagé dans la grande base de la plaquette 29 de largeur de 2R, tandis que la largeur de la plaquette 29 au niveau de sa petite base est $l_3$. Cette forme particulière de la plaquette 29 n'a aucune incidence notable sur la pose des revêtements latéraux $19'_a$ et $19'_b$ de la cloison. Compte tenu de l'utilisation du noyau et de la coiffe associée 21, le ruban 7 ne présentera en aucun cas de brusque variation de courbure. La clé de liaison selon l'invention présente donc une bonne qualité d'encastrement dans des panneaux cloisons et parois de toutes épaisseurs.

## Revendications

1. Clé de liaison entre un premier élément de structure (A) du type cloison, paroi ou panneau de cloison ou de paroi, notamment en matériau composite, et au moins un second élément de structure analogue (B), dont la surface moyenne et celle du premier élément de structure sont concourantes le long d'une ligne de jonction correspondante, caractérisée en ce qu'elle comprend:

— une première plaquette (8) et, pour chaque second élément de structure, une seconde plaquette (9), qui sont allongées de forme sensiblement parallélépipédique ou prismatique en un matériau relativement léger et rigide, capable de transmettre les efforts tranchants, et qui sont destinées à être intégrées respectivement dans ledit premier élément (A) et dans ledit second élément correspondant de structure (B), et empilées avec respectivement des premières plaquettes (8) et des secondes plaquettes correspondantes (9) d'autres clés de liaison, chaque seconde plaquette (9) étant disposée, par rapport à la première plaquette (8) de la clé de liaison correspondante, de sorte que l'axe longitudinal (Y-Y) de la seconde plaquette coupe celui (X-X) de la première plaquette (8) sur la ligne de jonction correspondante (Z-Z) et que la première et la seconde plaquette (8, 9) présentent deux faces transversales ($8_a$, $8_b$, $9_a$), perpendiculaires à la ligne de jonction, qui sont sensiblement dans deux mêmes plans, de sorte que la seconde plaquette (9) présente une face frontale d'extrémité qui est tournée vers une face latérale plane ($8_c$), interne à la liaison, de la première plaquette (8),

— un noyau (1) pour chaque seconde plaquette (9), ledit noyau étant en un matériau relativement léger et rigide, capable de transmettre les efforts de compression, et délimité par deux faces transversales planes (2, 3) sensiblement en forme de demi-lune, et par deux faces latérales convexes, dont une première (4) présente une courbure moins prononcée que la seconde (5) et a ses génératrices perpendiculaires à celles de ladite seconde face latérale convexe (5), ledit noyau (1) étant disposé entre la première plaquette (8) et la seconde plaquette correspondante (9) de sorte que ses deux faces transversales (2, 3) soient sensiblement dans les deux mêmes plans que les faces transversales ($8_a$, $8_b$, $9_a$) desdites première et seconde plaquettes (8, 9), que sa première face latérale convexe (4) soit contre la face latérale interne ($8_c$) de la première plaquette (8), et que sa seconde face latérale convexe (5) soit tournée vers ladite face frontale d'extrémité de la seconde plaquette (9), et, pour chaque noyau (1)

— un premier (6) et un second ruban (7) de stratifils unidirectionnels de fibres ou fils minéraux ou organiques à haute résistance mécanique et imprégnés d'une résine polymérisable, lesdits rubans (6, 7) formant deux boucles en U imbriqués l'un dans l'autre, entourant le noyau (1) et entre les branches ($6_a$, $6_b$; $7_a$, $7_b$) desquels sont insérées la première et la seconde plaquette correspondantes (8, 9), de sorte que le premier ruban (6) s'étende sur les deux faces transversales (2, 3) et la seconde face latérale convexe (5) du noyau (1), ainsi que sur les deux faces transversales ($8_a$, $8_b$), et, éventuellement, sur l'autre face latérale plane ($8_d$) externe à la liaison, de la première plaquette (8), afin de leur être solidarisé par polymérisation de la résine, et que le second ruban (7) s'étende sur la première face latérale convexe (4) du noyau (1) et sur les deux faces latérales planes de la seconde plaquette correspondante (9), afin de leur être solidarisé par polymérisation de la résine.

2. Clé de liaison selon la revendication 1, caractérisée en ce qu'elle comprend également, pour au moins un noyau (1), une coiffe (21) délimitée par deux faces transversales planes (22, 23) sensiblement en forme de demi-lune, et par deux faces latérales dont une première (24) est convexe, mais dont la seconde (25) est concave et sensiblement complémentaire de la seconde face latérale convexe (5) du noyau (1) correspondant, ladite coiffe (21) étant disposée entre ledit noyau (1) et ladite seconde plaquette correspondante (9'') de sorte que sa face latérale convexe (24) prolonge au moins partiellement la première face latérale convexe (4) du noyau (1) et soit partiellement entourée par le second ruban correspondant (7), qu'elle soit partiellement logée dans un évidement concave délimité par ladite face frontale d'extrémité de la seconde plaquette (9'') qui est tournée vers la première plaquette (8), et que sa face latérale concave (25) soit engagée sur la seconde face latérale convexe (5) du noyau (1) et appliquée contre la portion du premier ruban correspondant (6) qui la recouvre.

3. Clé de liaison selon l'une des revendications 1 et 2, caractérisée en ce que les deux faces latérales convexes (4, 5) d'un noyau (1) sont des faces semi-cylindriques, la première face convexe (4) ayant un rayon de courbure (R) qui est sensiblement égal à la moitié de la largeur ($l_1$) du premier ruban correspondant (6) et qui est supérieur au rayon de courbure (r) de la seconde face convexe (5), qui est lui-même sensiblement égal à la moitié de la largeur ($l_2$) du second ruban (7) correspondant.

4. Clé de liaison selon la revendication 3, telle que rattachée à la revendication 2, caractérisée en ce que la coiffe (21) a la forme d'un demi-tronc de cylindre dans lequel la face latérale concave (25) est délimitée par un évidement diamétral semi-cylindrique d'axe perpendiculaire à l'axe du tronc de cylindre et de rayon (r) sensiblement égal à la moitié de la hauteur du tronc de cylindre.

5. Clé de liaison selon l'une des revendications 1 à 4, caractérisée en ce qu'elle comprend de plus, au niveau d'une seconde plaquette (9'') dont l'axe longitudinal (Y'-Y') n'est pas perpendiculaire à celui (X-X) de la première plaquette (8), un troisième ruban de stratifils (26) imprégnés de résine polymérisable qui recouvre en partie, d'une part, la portion du second ruban (7) qui s'étend sur une face latérale de la seconde plaquette (9″) et sur le noyau (1) d'un côté de l'axe longitudinal (Y'-Y') de la seconde plaquette (9″) et, d'autre part, la face latérale interne (8c) de la première plaquette (8), de l'autre côté de l'axe longitudinal (Y'-Y') de la seconde plaquette (9″).

6. Clé de liaison selon l'une des revendications 1 à 5, caractérisée en ce que la première plaquette (8) est conformée en caisson de longeron interne audit premier élément de structure (A) et comporte une âme (10) en mousse disposée entre deux semelles latérales (11, 11') constituées chacune d'au moins une bande de stratifils unidirectionnels minéraux ou organiques agglomérés par une résine polymérisable, et s'étendant parallèlement à la direction longitudinale (X-X) de l'âme (10).

7. Clé de liaison selon l'une des revendications 1 à 6, caractérisée en ce que la seconde plaquette (9) est une pièce stratifiée constituant une âme destinée à faire suite à une âme (18) du second élément de structure correspondant (B), les deux branches (7a, 7b) du second ruban (7) qui sont solidarisées par polymérisation de la résine aux faces latérales de l'âme stratifiée constituant des semelles latérales formant avec cette âme un caisson de longeron pour le second élément de structure (B).

8. Clé de liaison selon l'une des revendications 6 et 7, caractérisée en ce que la première et/ou la seconde plaquette (8, 9) présentent une enveloppe externe (12) de tissus de fibres orientés à 90° et ± 45° par rapport à l'axe longitudinal (X-X, Y-Y) de la plaquette (8, 9) correspondante.

9. Clé de liaison selon l'une des revendications 1 à 8, caractérisée en ce qu'elle comprend, de plus, au moins une cale (27) de blocage angulaire d'au moins une seconde plaquette (9) par rapport à la première (8) avant polymérisation de la résine, ladite cale de blocage (27) étant insérée dans l'un des évidements délimités entre, d'une part, la face latérale interne (Bc) de la première plaquette (8) et, d'autre part, la première face latérale convexe (4) du noyau correspondant (1) et/ou une face latérale de la seconde plaquette (9).

10. Clé de liaison selon l'une des revendications 1 à 9, caractérisée en ce qu'au moins une face transversale de la première plaquette (8) présente, pour au moins une seconde plaquette (9), un évidement transversal à fond plat dans lequel se loge une branche (6a, 6b) du premier ruban (6) correspondant.

11. Clé de liaison selon l'une des revendications 1 à 10, caractérisée en ce qu'elle comprend également au moins une cale de compensation de l'épaisseur d'un premier ruban (6), ladite cale étant destinée à être disposée sur une face transversale (8a, 8b, 9a) de l'une des plaquettes (8, 9), afin d'être intercalée entre des plaquettes dans un empilement de clés de liaison.

12. Clé de liaison selon l'une des revendications 1 à 11, caractérisée en ce que les deux faces latérales d'au moins une seconde plaquette (29) convergent l'une vers l'autre du côté opposé au noyau (1) correspondant.

13. Raccord d'un premier élément de structure (A), du type cloison, paroi, ou panneau de cloison ou de paroi, notamment en matériau composite, avec au moins un second élément de structure analogue (B), dont la surface moyenne et celle du premier élément de structure sont concourantes le long d'une ligne de jonction correspondante (Z-Z), caractérisé en ce qu'il comprend au moins un empilage de plusieurs clés de liaison selon l'une des revendications 1 à 12 précédentes, dont les premières plaquettes (8) empilées forment une armature du premier élément de structure (A) qui est solidarisée entre deux remplissages (16a, 16b) pris en sandwich avec l'armature, au niveau de la jonction avec un second élément de structure (B) d'une paroi, un revêtement extérieur (15) appliqué contre les faces latérales externes (8d) des premières plaquettes (8) empilées et les faces latérales qui leur font suite sur les deux remplissages (16a, 16b), et, d'autre part, deux revêtements internes (17a, 17b) appliqués chacun d'un côté des premiers rubans (6) correspondants de l'empilage, contre les faces latérales internes (8c) des premières plaquettes empilées (8) et la face latérale qui leur fait suite sur le remplissage (16a, 16b), du côté correspondant, les deux revêtements intérieurs (17a, 17b) étant reliés l'un à l'autre par les portions des faces latérales internes (8c) des premières plaquettes (8) qui passent entre les deux branches (6a, 6b) des premiers rubans (6) correspondants de l'empilage, et délimitant entre eux une ouverture de passage des secondes plaquettes (9) empilées, qui forment une arête massive en bout de laquelle est solidarisé un remplissage (18) du second élément de structure correspondant (B), qui comporte également deux revêtements latéraux (19a, 19b) appliqués chacun d'un côté de l'arête massive contre la face latérale du remplissage (18) et les branches (7a, 7b) des seconds rubans (7) correspondants de l'empilage qui sont situées sur le côté correspondant de l'arête massive.

14. Raccord selon la revendication 13, caractérisé en ce qu'au moins au niveau de la jonction avec un second élément de structure, les branches (6a, 6b) des premiers rubans (6) correspondants sont incrustées dans les faces transversales (8a, 8b) des premières plaquettes (8) sous l'effet de la pression d'empilage des clés de liaison.

15. Raccord selon l'une des revendications 13 et 14, caractérisé en ce qu'au moins une cale de grande longueur (27', 27″), pour le blocage angulaire de secondes plaquettes (9″) empilées et des noyaux (1) correspondants par rapport aux premières plaquettes empilées (8) et/ou pour arrondir un angle formé entre lesdites premières et secondes plaquettes empilées (8, 9″), est insérée dans ledit angle et recouverte d'un revêtement de couverture continu (20', 20″) s'étendant, sur le côté correspondant des axes longitudinaux (Y'-Y') des secondes plaquettes empilées (9″), sur les branches (7a, 7b) des seconds rubans (7) recouvrant les faces latérales correspondantes desdites secondes plaquettes empilées et sur les faces latérales internes (8c) des premières plaquettes empilées (8) et/ou sur un revêtement (17a, 17b) recou-

vrant au moins partiellement ces faces latérales internes (8$_c$).

16. Raccord selon l'une des revendications 13 à 15, comprenant au moins un empilage de clés de liaison selon la revendication 5, caractérisé en ce que les troisièmes rubans (26) recouvrent alternativement, d'une clé de liaison à l'autre de l'empilage, d'une part, les branches (7$_a$, 7$_b$) des seconds rubans (7) s'étendant sur les faces latérales des secondes plaquettes empilées (9''), et, d'autre part, les faces latérales internes (8$_c$) des premières plaquettes empilées (8) qui sont alternativement d'un côté et de l'autre des axes longitudinaux (Y'-Y') desdites secondes plaquettes empilées (9'').

**Patentansprüche**

1. Verbindungsteil zwischen einem ersten Bauelement (A) in Form einer Zwischenwand, einer Seitenwand oder eines Teiles der Zwischen- oder Seitenwand aus insbesondere Verbundwerkstoff und zumindest einem zweiten analogen Bauelement (B), dessen Mittelfläche und jene des ersten Bauelementes sich längs einer entsprechenden Verbindungslinie schneiden, dadurch gekennzeichnet, dass es umfasst:
— eine erste Scheibe (8) und, für jedes zweite Bauelement, eine zweite Scheibe (9), die im wesentlichen längliche parallelepipedische oder prismatische Form aufweisen, aus einem relativ leichten und starren Material bestehen, das Scherkräfte übertragen kann, und die zum Einbau entsprechend in dem ersten Element (A) und in dem zweiten Element (B) vorgesehen und entsprechend mit den ersten Scheiben (8) und den entsprechenden zweiten Scheiben (9) anderer Verbindungsteile stapelbar sind, wobei jede zweite Scheibe (9) in bezug auf die erste Scheibe (8) des entsprechenden Verbindungsteiles so angeordnet ist, dass die Längsachse (Y-Y) der zweiten Scheibe die Längsachse (X-X) der ersten Scheibe (8) auf der entsprechenden Verbindungslinie (Z-Z) schneidet und dass die erste Scheibe (8) und die zweite Scheibe (9) zwei Querseiten (8a, 8b, 9a), die senkrecht auf der Verbindungslinie stehen, aufweisen, die im wesentlichen so in zwei gleichen Ebenen liegen, dass die zweite Scheibe (9) eine Endvorderseite darstellt, die im Inneren der Verbindung einer ebenen Seitenfläche (8c) der ersten Scheibe zugekehrt ist,
— einen Kern (1) für jede zweite Scheibe (9), der aus einem relativ leichten und steifen Material besteht, das Druckkräfte übertragen kann, und von zwei ebenen, im wesentlichen halbmondförmigen Querflächen (2, 3) und von zwei konvexen Seitenflächen begrenzt ist, deren erste (4) eine geringere Krümmung aufweist als deren zweite (5) und deren Mantellinien senkrecht auf jenen der zweiten konvexen Seitenfläche (5) stehen, wobei der Kern (1) so zwischen der ersten Scheibe (8) und der entsprechenden zweiten Scheibe (9) angeordnet ist, dass seine beiden Querflächen (2, 3) im wesentlichen in denselben Ebenen liegen wie die Querflächen (8a, 8b, 9a) der ersten und zweiten Scheiben (8, 9), dass seine erste konvexe Seitenfläche (4) an der inneren Seitenfläche (8c) der ersten Scheibe (8) anliegt und dass seine zweite konvexe Seitenfläche (5) der Endvorderseite der zweiten Scheibe (9) zugekehrt ist,
— und für jeden Kern (1) ein erstes Band (6) und ein zweites Band (7) aus unidirektionalen Rovings aus mineralischen oder organischen Fasern oder Fäden mit einer hohen mechanischen Festigkeit, die mit einem polymerisierbaren Harz imprägniert sind, wobei die beiden Bänder (6, 7) zwei ineinandergreifende, U-förmige Bügel bilden, die den Kern (1) umfassen und zwischen deren Armen (6a, 6b; 7a, 7b) die entsprechenden ersten und zweiten Scheiben (8 bzw. 9) eingesetzt sind, derart, dass das erste Band (6) auf den beiden Querflächen (2, 3) und auf der zweiten konvexen Seitenfläche (5) des Kernes (1) sowie auf den beiden Querflächen (8a, 8b) und gegebenenfalls auf der anderen ebenen Seitenfläche (8d) ausserhalb der Verbindung der ersten Scheibe (8) verläuft, damit diese durch Polymerisation des Harzes mit dem Band (6) verbunden sind, und dass das zweite Band (7) auf der ersten konvexen Seitenfläche (4) des Kernes (1) und auf den beiden ebenen Seitenflächen der entsprechenden zweiten Scheibe (9) verläuft, damit diese durch Polymerisation des Harzes mit diesem Band (7) verbunden sind.

2. Verbindungsteil nach Anspruch 1, dadurch gekennzeichnet, dass es für wenigstens einen Kern (1) eine Krone (21) aufweist, die von zwei ebenen, im wesentlichen halbmondförmigen Querflächen (22, 23) und von zwei Seitenflächen begrenzt ist, von denen eine erste (24) konvex, die zweite (25) aber konkav und im wesentlichen komplementär zu der zweiten konvexen Seitenfläche (5) des entsprechenden Kernes (1) ausgebildet ist, dass die Krone (21) zwischen dem Kern (1) und der entsprechenden zweiten Scheibe (9'') derart angeordnet ist, dass ihre konvexe Seitenfläche (24) wenigstens teilweise die erste konvexe Seitenfläche (4) des Kernes (1) verlängert und wenigstens teilweise von dem entsprechenden zweiten Band (7) umgeben ist, dass sie teilweise in einer konkaven Aussparung untergebracht ist, welche durch die genannte Endvorderseite der zweiten Scheibe (9''), die der ersten Scheibe (8) zugekehrt ist, begrenzt ist, und dass ihre konkave Seitenfläche (25) an der zweiten konvexen Seitenfläche (5) des Kernes (1) angreift und gegen einen Teil des entsprechenden ersten Bandes (6) anliegt, das sie bedeckt.

3. Verbindungsteil nach einem der Ansprüche 1 und 2, dadurch gekennzeichnet, dass die beiden konvexen Seitenflächen (4, 5) eines Kernes (1) halbzylindrische Flächen sind, wobei die erste konvexe Fläche (4) einen Krümmungsradius (R) aufweist, der im wesentlichen halb so gross ist wie die Breite (I$_1$) des ersten entsprechenden Bandes (6) und der grösser ist als der Krümmungsradius (r) der zweiten konvexen Flächen (5), der seinerseits im wesentlichen halb so gross sit wie die Breite (I$_2$) des zweiten entsprechenden Bandes (7).

4. Verbindungsteil nach Anspruch 3 in Verbindung mit Anspruch 2, dadurch gekennzeichnet,

dass die Krone (21) als schief abgeschnittener Halbzylinder ausgebildet ist, bei dem die konkave Seitenfläche (25) durch eine diametral verlaufende halbzylindrische Aussparung begrenzt ist, deren Achse senkrecht zu der Achse des schief abgeschnittenen Halbzylinders verläuft und dessen Radius (r) im wesentlichen halb so gross ist wie die Höhe des schief abgeschnittenen Halbzylinders.

5. Verbindungsteil nach einem der Ansprüche 1 bis 4, dadurch gekennzeichnet, dass es zusätzlich auf dem Niveau einer zweiten Scheibe (9″), deren Längsachse (Y′-Y′) nicht senkrecht auf jener (X-X) der ersten Scheibe (8) steht, ein drittes Rovingband (26) aufweist, das mit einem polymerisierbaren Harz imprägniert ist, das einerseits teilweise einen Abschnitt des zweiten Bandes (7), welches auf einer Seitenfläche der zweiten Scheibe (9″) und auf dem Kern (1) auf einer Seite der Längsachse (Y′-Y′) der zweiten Scheibe (9″) verläuft, und andererseits die innere Seitenfläche (8c) der ersten Scheibe (8) auf der anderen Seite der Längsachse (Y′-Y′) der zweiten Scheibe (9″) bedeckt.

6. Verbindungsteil nach einem der Ansprüche 1 bis 5, dadurch gekennzeichnet, dass die erste Scheibe (8) ein kastenförmiger Holm im Inneren des ersten Bauelementes (A) ist und einen Schaumstoffkern (10) aufweist, der zwischen zwei Seitenteilen (11, 11′) angeordnet ist, welche jeweils aus mindestens einem unidirektionalen Band aus Rovings aus mineralischem oder organischem Material bestehen, die durch polymerisierbares Harz zusammengehalten werden und parallel zur Längsrichtung (X-X) des Schaumstoffkernes (10) verlaufen.

7. Verbindungsteil nach einem der Ansprüche 1 bis 6, dadurch gekennzeichnet, dass die zweite Scheibe (9) ein laminiertes Teil ist, das einen Kern bildet, der hinter einem Kern (18) des zweiten entsprechenden Bauelementes (B) zu folgen bestimmt ist, wobei die beiden Arme (7a, 7b) des zweiten Bandes (7), welche durch die Polymerisation des Harzes mit den Seiten des laminierten Kernes verbunden sind, Seitenteile bilden, die mit diesem Kern einen kastenförmigen Holm für das zweite Bauelement (B) bilden.

8. Verbindungsteil nach Anspruch 6 oder 7, dadurch gekennzeichnet, dass die erste und/oder die zweite Scheibe (8 bzw. 9) eine äussere Hülle (12) aus Fasergeweben aufweist, welche in 90° und ±45° in bezug auf die Längsachsen (X-X, Y-Y) der entsprechenden Scheibe (8 bzw. 9) orientiert sind.

9. Verbindungsteil nach einem der Ansprüche 1 bis 8, dadurch gekennzeichnet, dass es zusätzlich mindestens einen winkeligen Arretierungskeil (27) für wenigstens eine zweite Scheibe (9) in bezug auf die erste Scheibe (8) vor der Polymerisation des Harzes aufweist, wobei dieser Arretierungskeil (27) in einem der Hohlräume eingesetzt ist, die einerseits von der inneren Seitenfläche (8c) der ersten Scheibe (8) und andererseits von der ersten konvexen Seitenfläche (4) des entsprechenden Kernes (1) und/oder einer Seitenfläche der zweiten Scheibe (9) begrenzt sind.

10. Verbindungsteil nach einem der Ansprüche 1 bis 9, dadurch gekennzeichnet, dass zumindest eine Querfläche der ersten Scheibe (8) für wenigstens eine zweite Scheibe (9) einen Querhohlraum mit flachem Boden aufweist, in welchen ein Arm (6a, 6b) des entsprechenden ersten Bandes (6) eingreift.

11. Verbindungsteil nach einem der Ansprüche 1 bis 10, dadurch gekennzeichnet, dass es auch wenigstens einen Kompensationskeil mit der Stärke eines ersten Bandes (6) aufweist, wobei dieser Kompensationskeil auf einer Querfläche (8a, 8b, 9a) einer der Scheiben (8, 9) aufgebracht ist, damit er zwischen den Scheiben in einem Verbindungsteilstapel eingeschoben ist.

12. Verbindungsteil nach einem der Ansprüche 1 bis 11, dadurch gekennzeichnet, dass die beiden Seitenflächen wenigstens einer zweiten Scheibe (29) in Richtung auf die gegenüberliegende Seite des entsprechenden Kernes (1) zueinander konvergieren.

13. Verbindung eines ersten Bauelementes (A) in Form einer Zwischenwand, einer Seitenwand oder eines Teiles davon aus insbesondere einem Verbundwerkstoff mit wenigstens einem zweiten analogen Bauelement (B), dessen Mittelfläche und jene des ersten Bauelementes entlang einer entsprechenden Verbindungslinie (Z-Z) zusammenlaufen, dadurch gekennzeichnet, dass sie wenigstens einen Stapel mehrerer Verbindungsteile nach einem der Ansprüche 1 bis 12 aufweist, bei dem die ersten gestapelten Scheiben (8) eine Armierung des ersten Bauelementes (A) bilden, das zwischen zwei Füllungen (16a, 16b) sandwichartig mit der Armierung auf der Höhe der Verbindungsstelle mit einem zweiten Bauelement (B) verbunden ist, und zwar einerseits zwischen einer Aussenverkleidung (15), die auf den äusseren Seitenflächen (8d) der ersten gestapelten Scheiben (8) und auf den Seitenflächen der sich diesen anschliessenden Füllungen (16a, 16b) aufgebracht ist, und zwei Innenverkleidungen (17a, 17b) andererseits, welche je auf einer Seite der entsprechenden ersten Bänder (6) des Stapels, auf den inneren Seitenflächen (8c) der ersten gestapelten Scheiben (8) und auf der sich daran anschliessenden Seitenfläche der Füllungen (16a bzw. 16b) auf entsprechenden Seiten aufgebracht sind, wobei die beiden Innenverkleidungen (17a und 17b) durch die Teile der inneren Seitenflächen (8c) der ersten Scheiben (8) miteinander verbunden sind, welche zwischen den zwei Armen (6a, 6b) der entsprechenden ersten Bänder (6) des Stapels verlaufen und zwischen sich eine Durchgangsöffnung der zweiten gestapelten Scheiben (9) begrenzen, welche Scheiben (9) eine massive Rippe an ihrem Ende bilden, mit der eine Füllung (18) des entsprechenden zweiten Bauelementes (B) verbunden ist, das ebenfalls zwei Seitenverkleidungen (19a, 19b) aufweist, die je auf einer Seite der massiven Rippe an der Seitenfläche der Füllung (18) und der Arme (7a, 7b) der entsprechenden zweiten Bänder (7) des Stapels angebracht sind, welche auf der entsprechenden Seite der massiven Rippe liegen.

14. Verbindung nach Anspruch 13, dadurch gekennzeichnet, dass die Arme (6a, 6b) der entsprechenden ersten Bänder (6) wenigstens auf der Höhe der Verbindungsstelle mit einem zweiten Bauelement an den Querflächen (8a, 8b) der ersten Scheibe (8) unter der Wirkung des Stapeldruckes der Verbindungsteile gehalten sind.

15. Verbindung nach Anspruch 13 und 14, gekennzeichnet durch wenigstens einen Keil grosser Länge (27', 27'') für eine winkelige Arretierung der zweiten gestapelten Scheiben (9'') und der entsprechenden Kerne (1) in bezug auf die gestapelten ersten Scheiben (8) und/oder zum Abrunden eines Winkels zwischen den ersten und zweiten gestapelten Scheiben (8, 9''), der in den genannten Winkel eingesetzt und durch eine Verkleidung aus einer fortlaufenden Abdeckung (20', 20'') abgedeckt ist, die sich auf der entsprechenden Seite der Längsachsen (Y'-Y') der zweiten gestapelten Scheiben (9''), auf den Armen (7a, 7b) der zweiten Bänder (7), welche die entsprechenden Seitenflächen der gestapelten zweiten Scheiben bedecken, und auf den inneren Seitenflächen (8c) der gestapelten ersten Scheiben (8) und/oder auf einer diese inneren Seitenflächen (8c) zumindest teilweise verdeckenden Verkleidung (17a, 17b) erstreckt.

16. Verbindung nach einem der Ansprüche 13 bis 15, die wenigstens einen Verbindungsteilstapel nach Anspruch 5 umfasst, dadurch gekennzeichnet, dass die dritten Bänder (26), die von einem Verbindungsteil zum anderen des Stapels verlaufen, abwechselnd einerseits die Arme (7a, 7b) der zweiten Bänder (7), die sich auf den Seitenflächen der zweiten gestapelten Scheiben (9'') erstrecken, und andererseits die inneren Seitenflächen (8c) der ersten gestapelten Scheiben (8), die sich abwechselnd auf der einen und der anderen Seite der Längsachse (Y'-Y') der genannten Scheiben (9'') befinden, bedecken.

## Claims

1. Connecting key between a first structural element (A) of the partition, wall, partition-panel or wall-panel type, especially made of composite material, and at least one similar second structural element (B), of which the mid-surface and that of the first structural element are concurrent along a corresponding joining line, characterized in that it comprises:
   — a first plate (8) and, for each second structural element, a second plate (9) which are elongate, of substantially parallelepipedic or prism-shaped form and made of a relatively light and rigid material capable of transmitting shearing forces and which are intended to be incorporated respectively in the said corresponding first and second structural elements (A) and (B) and stacked respectively with corresponding first plates (8) and corresponding second plates (9) of other connecting keys, each second plate (9) being arranged in relation to the first plate (8) of the corresponding connecting key, in such a way that the longitudinal axis (Y-Y) of the second plate intersects that (X-X) of the first plate (8) on the corresponding joining line (Z-Z), and that the first and second plates (8, 9) have two transverse faces (8a, 8b, 9a) which are perpendicular to the joining line and which are substantially in the same two planes, so that the second plate (9) has a front end face confronting a plane lateral face (8c), within the connection, of the first plate (8),
   — a core (1) for each second plate (9), the said core being made of a relatively light and rigid material capable of transmitting compressive forces and delimited by two plane transverse faces (2, 3) substantially in the form of a half-moon and by two convex lateral faces, of which a first (4) has a curvature less pronounced than that of the second (5) and has its generatrices perpendicular to those of the said second convex lateral face (5), the said core (1) being arranged between the first plate (8) and the corresponding second plate (9), in such a way that its two transverse faces (2, 3) are substantially in the same two planes as the transverse faces (8a, 8b, 9a) of the said first and second plates (8, 9), that its first convex lateral face (4) is against the inner lateral face (8c) of the first plate (8), and that its second convex lateral face (5) confronts the said front end face of the second plate (9), and, for each core (1),
   — a first (6) and a second (7) strip of unidirectional rovings of mineral or organic fibres or filaments of high mechanical resistance and impregnated with a polymerizable resin, the said strips (6, 7) forming two U-shaped loops which are interleaved one in the other and surround the core (1) and between the branches (6a, 6b; 7a, 7b) of which the corresponding first and second plates (8, 9) are inserted in such a way that the first strip (6) extends over the two transverse faces (2, 3) and the second converse lateral face (5) of the core (1), as well as over the two transverse faces (8a, 8b) and, if appropriate, over the other plane lateral face (8d), outside the connection, of the first plate (8) so as to be fixed to them as a result of the polymerization of the resin, and that the second strip (7) extends over the first convex lateral face (4) of the core (1) and over the two plane lateral faces of the corresponding second plate (9), so as to be fixed to them as a result of the polymerization of the resin.

2. Connecting key according to Claim 1, characterized in that it also possesses, for at least one core (1), a cap (21) delimited by two plane transverse faces (22, 23) substantially in the form of a half-moon and by two lateral faces, a first (24) of which is convex, but the second (25) of which is concave and substantially complementary to the second convex lateral face (5) of the corresponding core (1), the said cap (21) being arranged between the said core (1) and the said corresponding second plate (9''), in such a way that its convex lateral face (24) at least partially extends the first convex lateral face (4) of the core (1) and is partially surrounded by the corresponding second strip (7), that it is partially seated in a concave recess delimited by the said front end face of the second plate (9'') confronting the first plate (8) and that its concave lateral face (25) is engaged on the second convex lateral face (5) of the core (1) and laid against that portion of the corresponding first strip (6) which covers it.

3. Connecting key according to one of Claims 1 and 2, characterized in that the two convex lateral faces (4, 5) of one core (1) are semi-cylindrical faces, the first convex face (4) having a radius of curvature (R) which is substantially equal to half the width ($l_1$) of the corresponding first strip (6) and which is greater than the radius of curvature (r) of the second convex face (5) which is itself substantially equal to half the width ($l_2$) of the corresponding second strip (7).

4. Connecting key according to Claim 3, in conjunction with Claim 2, characterized in that the cap (21) has the form of a half-truncated cylinder, in which the concave lateral face (25) is delimited by a semi-cylindrical diametral recess of an axis perpendicular to the axis of the truncated cylinder and of the radius (r) substantially equal to half the height of the truncated cylinder.

5. Connecting key according to one of Claims 1 to 4, characterized in that it also possesses, in the region of a second plate (9''), the longitudinal axis (Y'-Y') of which is not perpendicular to that (X-X) of the first plate (8), a third strip of rovings (26) impregnated with polymerizable resin, which partially covers, on the one hand, that portion of the second strip (7) extending over a lateral face of the second plate (9'') and over the core (1) on one side of the longitudinal axis (Y'-Y') of the second plate (9'') and, on the other hand, the inner lateral face ($8_c$) of the first plate (8) on the other side of the longitudinal axis (Y'-Y') of the second plate (9'').

6. Connecting key according to one of Claims 1 to 5, characterized in that the first plate (8) is shaped as a box girder within the said first structural element (A) and comprises a foam core piece (10) arranged between two lateral flanges (11, 11') each consisting of at least one band of unidirectional mineral or organic rovings agglomerated by means of a polymerizable resin and extending parallel to the longitudinal direction (X-X) of the core piece (10).

7. Connecting key according to one of Claims 1 to 6, characterized in that the second plate (9) is a laminated component forming a core piece intended to follow a core piece (18) of the corresponding second structural element (B), and the two branches ($7_a$, $7_b$) of the second strip (7) which are fixed to the lateral faces of the laminated core piece as a result of the polymerization of the resin constitute lateral flanges forming with this core piece a box girder for the second structural element (B).

8. Connecting key according to one of Claims 6 and 7, characterized in that the first and/or the second plates (8, 9) have an outer casing (12) of fabrics of fibres oriented at 90° and ± 45° relative to the longitudinal axis (X-X, Y-Y) of the corresponding plate (8, 9).

9. Connecting key according to one of Claims 1 to 8, characterized in that it also possesses at least one wedge (27) for the angular blocking of at least one second plate (9) relative ot the first (8) before the polymerization of the resin, the said blocking wedge (27) being inserted in one of the recesses delimited between, on the one hand, the inner lateral face ($8_c$) of the first plate (8) and, on the other hand, the first convex lateral face (4) of the corresponding core (1) and/or a lateral face of the second plate (9).

10. Connecting key according to one of Claims 1 to 9, characterized in that at least one transverse face of the first plate (8) has, for at least one second plate (9), a transverse recess with a flat bottom, in which is seated a branch ($6_a$, $6_b$) of the corresponding first strip (6).

11. Connecting key according to one of Claims 1 to 10, characterized in that it also possesses at least one shim for compensating the thickness of a first strip (6), the said shim being intended to be arranged on a transverse face ($8_a$, $8_b$, $9_a$) of one of the plates (8, 9), so as to be inserted between plates in a stack of connecting keys.

12. Connecting key according to one of Claims 1 to 11, characterized in that the two lateral faces of at least one second plate (29) converge towards one another on the side opposite to the corresponding core (1).

13. Connection of a first structural element (A) of the partition, wall, partition-panel or wall-panel type, especially made of composite material, to at least one similar second structural element (B) of which the mid-surface and that of the first structural element are concurrent along a corresponding joining line (Z-Z), characterized in that it comprises at least one stack of several connecting keys according to one of the preceding Claims 1 to 12, of which the stacked first plates (8) form a reinforcement of the first structural element (A), the said reinforcement being secured between two fillings ($16_a$, $16_b$) sandwiched with the reinforcement, at the junction with a second structural element (B), between, on the one hand, an outer covering (15) laid against the outer lateral faces ($8_d$) of the stacked first plates (8) and the lateral faces following them on the two fillings ($16_a$, $16_b$) and, on the other hand, two inner coverings ($17_a$, $17_b$) each laid, on one side of the corresponding first strips (6) of the stack, against the inner lateral faces ($8_c$) of the stacked first plates (8) and the lateral face following them on the filling ($16_a$, $16_b$), on the corresponding side, the two inner coverings ($17_a$ and $17_b$) being connected to one another by means of those portions of the inner lateral faces ($8_c$) of the first plates (8) which pass between the two branches ($6_a$, $6_b$) of the corresponding first strips (6) of the stack and delimiting between them an orifice for passage of the stacked second plates (9) which form a solid edge, to the end of which is fixed a filling (18) for the corresponding second structural element (B) which likewise has two lateral coverings (19a, 19b), each laid, on one side of the solid edge, against the lateral face of the filling (18) and those branches ($7_a$, $7_b$) of the corresponding second strips (7) of the stack which are located on the corresponding side of the solid edge.

14. Connection according to Claim 13, characterized in that, at least at the junction with a second structural element, the branches ($6_a$, $6_b$) of the corresponding first strips (6) are inlaid into the transverse faces ($8_a$, $8_b$) of the first plates (8) under the effect of the stacking pressure of the connecting keys.

15. Connection according to one of Claims 13 and 14, characterized in that at least one shim of great length (27', 27'') for the angular blocking of stacked second plates (9'') and corresponding cores (1) relative to the stacked first plates (8) and/or for rounding an angle formed between the said stacked first and second plates (8, 9'') is inserted into the said angle and covered with a continuous covering which, on the corresponding side of the longitudinal axes (Y'-Y') of the stacked second plates (9''), extends over the branches ($7_a$, $7_b$) of the second strips (7) covering the corresponding lateral faces of the said stacked second plates and over the inner lateral faces ($8_c$) of the stacked first plates (8) and/or over a covering ($17_a$, $17_b$) which at least partially covers these inner lateral faces ($8_c$).

16. Connection according to one of Claims 13 to 15, comprising at least one stack of connecting keys according to Claim 5, characterized in that the third strips (26) alternately cover, from one connecting key of the stack to the other, on the one hand the branches ($7_a$, $7_b$) of the second strips (7) extending over the lateral faces of the stacked second plates (9'') and on the other hand the inner lateral faces ($8_c$) of the stacked first plates (8) which are alternately on one side and the other of the longitudinal axes (Y'-Y') of the said stacked second plates (9'').

FIG.1

FIG.1a

FIG.2

FIG.3

FIG.4

FIG.5

FIG.6

FIG.7

FIG.8

FIG.9

FIG.10

FIG.11

FIG.11a

FIG.12

FIG.13

FIG.14